(19) Europäisches Patentamt
European Patent Office
Office européen des brevets

(11) EP 2 687 933 A1

(12) EUROPEAN PATENT APPLICATION
published in accordance with Art. 153(4) EPC

(43) Date of publication:
22.01.2014 Bulletin 2014/04

(51) Int Cl.:
G05B 19/4093 (2006.01)    B23Q 15/00 (2006.01)
G05B 19/4069 (2006.01)

(21) Application number: 12757281.6

(22) Date of filing: 23.02.2012

(86) International application number:
PCT/JP2012/054422

(87) International publication number:
WO 2012/124447 (20.09.2012 Gazette 2012/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 17.03.2011  JP 2011059505
31.01.2012  JP 2012017485

(71) Applicant: Hitachi, Ltd.
Tokyo 100-8280 (JP)

(72) Inventors:
• TSUTSUMI, Daisuke
Chiyoda-ku, Tokyo (JP)
• ONOZUKA, Hideaki
Chiyoda-ku, Tokyo (JP)
• KONO, Ippei
Chiyoda-ku, Tokyo (JP)
• NAKANO, Takahiro
Chiyoda-ku, Tokyo (JP)
• BAYASI, Qiqige
Chiyoda-ku, Tokyo (JP)

(74) Representative: Calderbank, Thomas Roger et al
Mewburn Ellis LLP
33 Gutter Lane
London
EC2V 8AS (GB)

(54) **NC PROGRAM GENERATION METHOD AND CUTTING PROCESSING METHOD**

(57)     An NC program generating method is capable of predicting tool wear with high precision before carrying out machining in three-dimensional-shape cutting and generating an NC program in consideration of tool change, etc. In the NC program generating method, an NC simulator 5 executes an NC simulation of an NC program at each process interval set in advance; a machining-condition acquiring unit 6 and the machining-state acquiring unit 7 acquire a machining condition and a machining state; a tool-wear-amount calculating unit 8 references a tool wear amount corresponding to the machining state from a tool wear database 10 and calculates information about a tool wear amount of each process interval; and an NC-program-optimization processing unit 9 changes the machining condition of the NC program and optimizes the NC program so that a tool can be used without waste based on the information about the tool wear amount of each process interval calculated by the tool-wear-amount calculating unit 8.

FIG. 1

EP 2 687 933 A1

## Description

### TECHNICAL FIELD

The present invention relates to an NC program generating method of an NC working machine that carries out three-dimensional-shape cutting and particularly relates to generation of an NC program based on wear predictions of a tool.

### BACKGROUND ART

Background techniques of the present technical field include techniques described in Japanese Patent Application Laid-Open No. H5-138497 (Patent Literature 1), Japanese Patent Application Laid-Open No. 2004-255514 (Patent Literature 2), WO00/12260 (Patent Literature 3), and WO98/19820 (Patent Literature 4).

Patent Literature 1 describes that "the usage time of a tool is measured, a wear amount of the tool is always estimated in accordance with the measured time, and a tool offset amount is corrected" (see abstract).

Moreover, Patent Literature 2 describes that "since the relation between the wear amount and the cutting distance is obtained, a tool life can be predicted, and timing of tool change can be determined" (see abstract).

Moreover, Patent Literature 3 describes a method of estimating a wear amount from the cutting amount at each blade tip point, a cutting length accumulation, and the number of times of collision by a machining simulation.

Moreover, Patent Literature 4 describes a method of optimizing an NC program by analyzing an actual-machining NC program finally used at a site, extracting optimum machining information and machining conditions, and using them as a database.

### Citation List

### Patent Literatures

Patent Literature 1: Japanese Patent Application Laid-Open No. H5-138497
Patent Literature 2: Japanese Patent Application Laid-Open No. 2004-255514
Patent Literature 3: WO00/12260
Patent Literature 4: WO98/19820

### DISCLOSURE OF THE INVENTION

### PROBLEMS TO BE SOLVED BY THE INVENTION

However, as the technique described in Patent Literature 1, the method of estimating the wear amount of the tool in accordance with the measured usage time of the tool is described; however, the wear amount estimating method of Patent Literature 1 has a problem that the usage time of the tool cannot be measured unless machining is actually carried out.

Patent Literature 2 describes the method of estimating the wear amount from the total cutting distance of machining paths or tool use time as the method of predicting the tool wear before machining is carried out. Patent Literature 3 describes the method of estimating the wear amount from the cutting amount of each blade tip point, the cutting length accumulation, and the number of times of collision by the machining simulation. However, in cutting of a three-dimensional shape, the machining states such as axial cut and radial cut are varied momentarily. Therefore, the technique of Patent Literature 2 based on the total cutting distance or the tool usage time on the assumption of cutting in constant machining states and the technique of the tool wear prediction of Patent Literature 3 focusing on the blade tip point have a problem that errors become large.

Moreover, in a situation in which machining objects are different and the shapes thereof are complex even though working machines, tools, and materials are the same, the method of Patent Literature 4 has a problem that the NC program cannot be optimized also in consideration of progress of tool wear.

Therefore, it is an object of the present invention to provide an NC program generating method capable of predicting tool wear with high precision before carrying out machining in three-dimensional-shape cutting and generating an NC program in consideration of tool change, etc.

The above and other preferred aims and novel characteristics of the present invention will be apparent from the description of the present specification and the accompanying drawings.

## MEANS FOR SOLVING THE PROBLEMS

The typical ones of the inventions disclosed in the present application will be briefly described as follows.

More specifically, a summary of the typical embodiment is an NC program generating method, the method including: executing an NC simulation of the NC program by an NC simulator at each process interval set in advance; acquiring a machining condition of the each process interval from the NC simulator by a machining-condition acquiring unit; acquiring a machining state of the each process interval from the NC simulator by a machining-state acquiring unit; referencing a tool wear amount corresponding to the machining state from a tool wear database, in which information of the tool wear amount of a tool set to correspond to the machining condition and the machining state is registered, and calculating information about a tool wear amount of the each process interval by a tool-wear-amount calculating unit; and changing the machining condition of the NC program and optimizing the NC program based on the information about the tool wear amount of the each process interval calculated in the tool-wear-amount calculating unit by an NC-program-optimization processing unit so that the tool can be used without waste.

## EFFECTS OF THE INVENTION

The effects obtained by typical aspects of the present invention will be briefly described below.

More specifically, as the effects obtained by the typical elements, the NC program generating method capable of improving machining efficiency and reducing tool cost can be provided by optimizing the NC program based on tool wear predictions.

## BRIEF DESCRIPTIONS OF THE DRAWINGS

FIG. 1 is a configuration diagram of a configuration of a computer system which implements an NC program generating method according to an embodiment of the present invention;

FIG. 2 is a flow chart showing the outlines of a process according to the NC program generating method according to the embodiment of the present invention;

FIG. 3 is a flow chart showing a tool-wear-amount calculating process according to the NC program generating method according to the embodiment of the present invention;

FIG. 4 is an explanatory diagram for explaining a cutting situation in the NC program generating method according to the embodiment of the present invention;

FIG. 5 is an explanatory diagram for explaining tool wear in the NC program generating method according to the embodiment of the present invention;

FIG. 6 is a diagram showing an example of a tool wear graph registered in a tool wear DB used in the NC program generating method according to the embodiment of the present invention;

FIG. 7 is a diagram showing an example of a tool wear table registered in the tool wear DB used in the NC program generating method according to the embodiment of the present invention;

FIG. 8 is a diagram showing an example of results of tool wear amounts according to the NC program generating method according to the embodiment of the present invention;

FIG. 9 is a diagram showing an example of output results of predictions according to the NC program generating method according to the embodiment of the present invention;

FIG. 10 is a flow chart showing the NC program optimizing process according to the NC program generating method according to the embodiment of the present invention;

FIG. 11 is a diagram showing an example of display of an input screen of optimization conditions of the NC program optimizing process according to the NC program generating method according to the embodiment of the present invention;

FIG. 12 is a diagram showing an example of an optimization-condition configuration file of the NC program optimizing process according to the NC program generating method according to the embodiment of the present invention;

FIG. 13 is a flow chart showing a processing-condition optimizing process of the NC program optimizing process according to the NC program generating method according to the embodiment of the present invention;

FIG. 14 is an explanatory diagram for explaining an example in which the NC program optimizing process according to the NC program generating method according to the embodiment of the present invention was executed;

FIG. 15 is an explanatory diagram for explaining an example in which the NC program optimizing process according to the NC program generating method according to the embodiment of the present invention was executed;

FIG. 16 is a flow chart showing a tool-replacing-code inserting process according to the NC program generating method according to the embodiment of the present invention;

FIG. 17 is an explanatory diagram for explaining an example in which the tool-replacing-code inserting process according to the NC program generating method according to the embodiment of the present invention was executed;

FIG. 18 is an explanatory diagram for explaining an example in which the NC program optimizing process according to the NC program generating method according to the embodiment of the present invention was executed;

FIG. 19 is an explanatory diagram for explaining axial-cut varying machining according to the NC program generating method according to the embodiment of the present invention;

FIGs. 20A to 20D are explanatory diagrams for explaining the axial-cut varying machining according to the NC program generating method according to the embodiment of the present invention;

FIG. 21 is an explanatory diagram for explaining axial-cut varying machining according to the NC program generating method according to the embodiment of the present invention;

FIGs. 22A and 22B are explanatory diagrams for explaining the axial-cut varying machining according to the NC program generating method according to the embodiment of the present invention;

FIGs. 23A and 23B are explanatory diagrams for explaining the axial-cut varying machining according to the NC program generating method according to the embodiment of the present invention;

FIG. 24 is a flow chart showing the NC program optimizing process using the axial-cut varying machining in consideration of boundary wear in the NC program generating method according to the embodiment of the present invention; and

FIG. 25 is an explanatory diagram for explaining an example in which the NC program optimizing process using the axial-cut varying machining in consideration of boundary wear in the NC program generating method according to the embodiment of the present invention was executed.

## BEST MODE FOR CARRYING OUT THE INVENTION

Hereinafter, embodiments of the present invention will be described in detail with reference to the accompanying drawings. Note that components having the same function are denoted by the same reference symbols throughout the drawings for describing the embodiment, and the repetitive description thereof will be omitted.

<Configuration of Computer System that implements NC Program Generating Method>

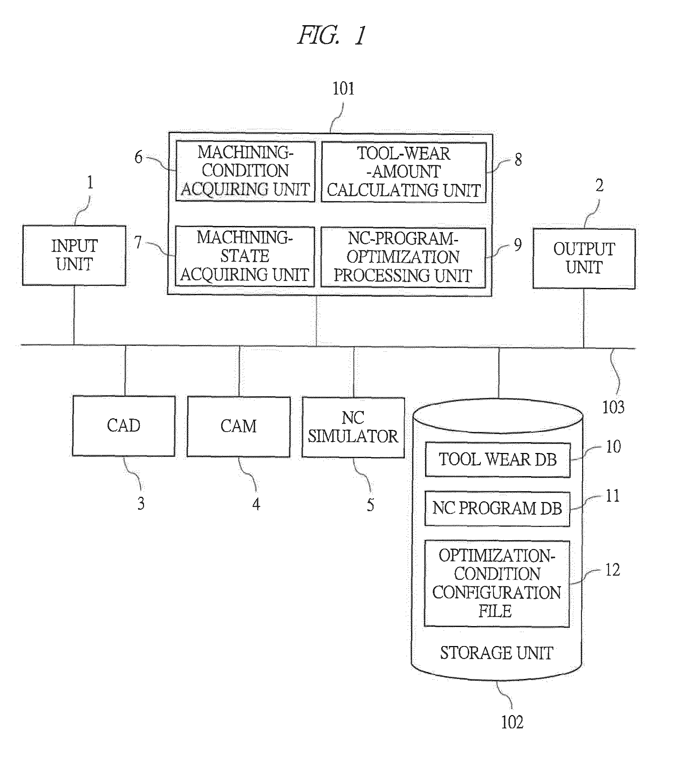

With reference to FIG. 1, the configuration of a computer system that implements an NC program generating method according to an embodiment of the present invention will be explained. FIG. 1 is a configuration diagram of the configuration of the computer system that implements the NC program generating method according to the embodiment of the present invention.

In FIG. 1, the computer system is comprised of a processing unit 101, a storage unit 102, an input unit 1, an output unit 2, an NC simulator 5, and connection lines 103 connecting them. A CAD 3 and a CAM 4 may be connected to the connection lines 103.

The processing unit 101 is a processor such as a CPU; the storage unit 102 is, for example, an HDD or a semiconductor memory; the input unit 1 is, for example, a keyboard or a mouse; the output unit 2 is, for example, a display or a printer; and the connection lines 103 are, for example, connection cords or a network.

Moreover, the processing unit 101 executes a program (s) stored in, for example, a storage device, thereby functioning as a machining-condition acquiring unit 6, a machining-state acquiring unit 7, a tool-wear-amount calculating unit 8, and an NC-program-optimization processing unit 9. The storage device of the processing unit 101 stores a tool wear DB 10 and an NC program DB 11. In this storage device, an optimization-condition configuration file 12 may be stored.

The input unit 1 receives inputs of instructions from a user, and the output unit 2 displays or prints out processing results of the present computer system.

The NC simulator 5 loads an NC program(s) created by the CAM 4 or an NC program(s) stored in the NC program DB 11 and executes a machining simulation.

The machining-condition acquiring unit 6 acquires a machining condition(s) such as a tool rotation speed and a tool feeding speed from the information of the loaded NC program(s).

According to execution results of the NC simulation, the machining-state acquiring unit 7 sequentially acquires machining states such as a radial cut amount, an axial cut amount, a contact area, a cut volume, a cut distance, and machining time.

The tool-wear-amount calculating unit 8 uses the information acquired by the machining-condition acquiring unit 6 and the machining-state acquiring unit 7 as inputs, references the tool wear database 10, and calculates a tool wear amount(s).

Based on the information acquired by the machining-condition acquiring unit 6 and the tool wear amount calculated by the tool-wear-amount calculating unit 8, the NC-program-optimization processing unit 9 optimizes the NC program(s) and registers an optimization result(s) in the NC program DB.

In the tool wear database 10 (in the drawing, abbreviated as tool wear DB), an experimentally obtained wear volume (s) of a tool (s) is registered. The tool wear amount is registered as, for example, a graph, a table, or a function.

In the NC program database 11 (in the drawing, abbreviated as NC program DB), the existing NC program(s) and the optimized NC program(s) are registered.

In the optimization-condition configuration file 12, set values required in the processing of the NC-program-optimization processing unit 9 are registered. In a case in which inputs are directly received by the NC-program-optimization processing unit 9, the optimization-condition configuration file 12 is not essential.

<Outlines of Process according to NC Program Generating Method>

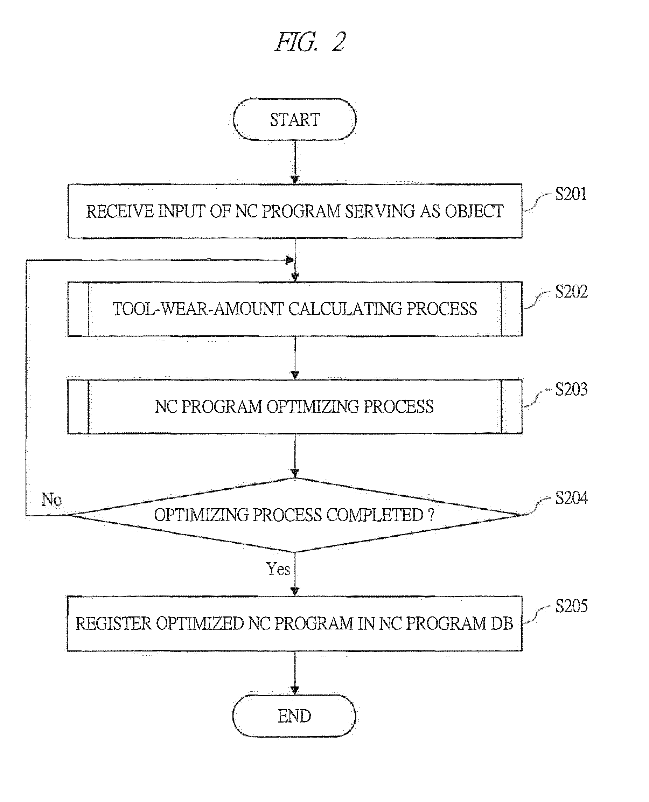

Next, outlines of a process according to the NC program generating method according to the embodiment of the present invention will be explained with reference to FIG. 2. FIG. 2 is a flow chart showing the outlines of the process according to the NC program generating method according to the embodiment of the present invention.

First, in step S201, an input of an NC program serving as a processing object is received from the NC program DB 11 via the input unit 1. In step S202, an NC simulation is executed for the NC program received in step S201 to calculate a tool wear amount. Details of a tool-wear-amount calculating process will be described later.

In step S203, whether an optimizing process is to be implemented or not is judged based on the tool wear amount calculated in step S202, and determination of completing the optimizing process is made or the optimizing process of the NC program is carried out. Details of the NC program optimizing process will be described later.

In step S204, whether the optimizing process has been completed in step S203 or not is judged; if finished, the process proceeds to step S205; and if not completed, the process returns to step S202, and a tool wear amount is calculated again for the NC program optimized in step S203.

In step S205, the NC program optimized in step S203 is registered in the NC program DB 11.

The number of the NC program of which input is received in step S201 is not limited to one. A plurality of NC programs divided for steps, respectively, or a plurality of identical NC programs can be set. By virtue of this, tool wear of the case in which processing is continued with one tool without carrying out tool change can be predicted.

<Tool-Wear-amount Calculating Process>

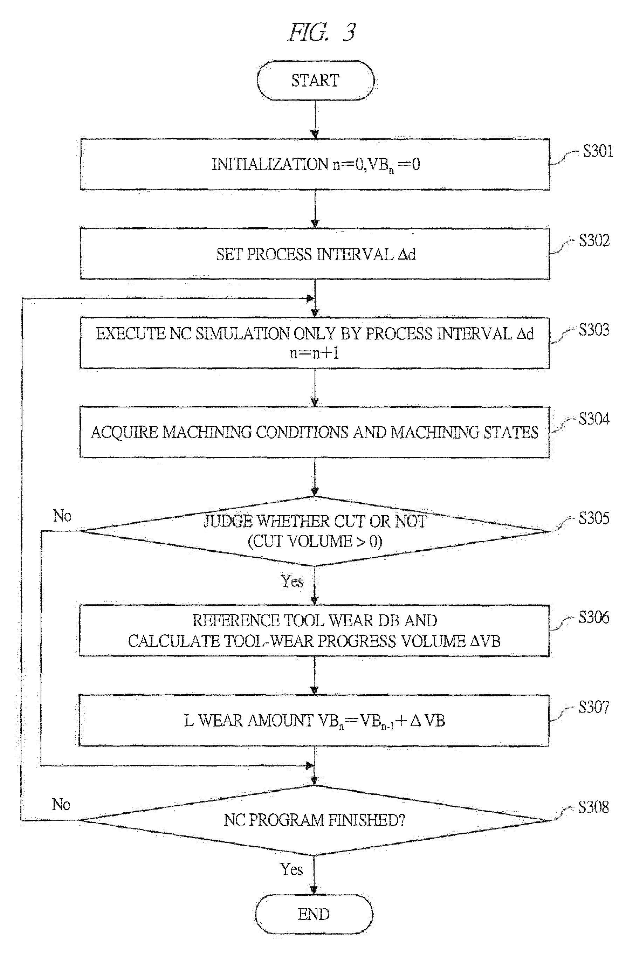

Next, the tool-wear-amount calculating process according to the NC program generating method according to the embodiment of the present invention will be explained with reference to FIG. 3. FIG. 3 is a flow chart showing the tool-wear-amount calculating process according to the NC program generating method according to the embodiment of the present invention.

First, in step S301, the number n of NC simulations and the value of an internal variable of the tool wear amount $VB_n$ are initialized. In step S302, a tool moving distance is set so that a process interval of the NC simulation is $\Delta d$. A value input by a user and received by the input unit 1 or a value retained by the machining-condition acquiring unit 6 or the machining-state acquiring unit 7 in an initial state is used as the value of $\Delta d$.

In step S303, the NC simulation is executed only by the process interval $\Delta d$ set in step S302, and "1" is added to the number n of the NC simulations.

In step S304, the machining-condition acquiring unit 6 and the machining-state acquiring unit 7 acquire machining conditions and machining states from the results of the NC simulation executed in step S303. In step S305, according to the information of the machining states acquired in step S304, whether the tool has cut a cutting work material or not in a zone of the process interval $\Delta d$ is judged.

If cutting has been carried out in step S305, the process proceeds to step S306; and if cutting has not been carried out in step S305, the process proceeds to step S308.

In step S306, based on the machining conditions and the machining states acquired in step S304, the tool wear DB 10 is referenced, and a tool-wear progress volume $\Delta VB$ in the zone of the process interval $\Delta d$ is calculated. In step S307, the above-described calculated tool-wear progress volume $\Delta VB$ is added to a tool wear amount VB calculated in a previous process.

In step S308, finish of the NC program serving as a processing object is judged. If all blocks of the NC program have been processed, the tool-wear-amount calculating process is finished. If the NC program has an unprocessed block(s), the process returns to step S303 and continues the process.

Herein, the block refers to a program corresponding to one row that constitutes the NC program.

As the process interval $\Delta d$, for example, not only the moving distance (meter or inch) of the tool, but also the sliding distance (meter or inch) which is the distance actually processed by a tool blade tip, processing time (second or minute), or a cut volume (cubic meter or cubic inch) can be employed.

<Example of Data and Output Results used in NC Program Generating Method>

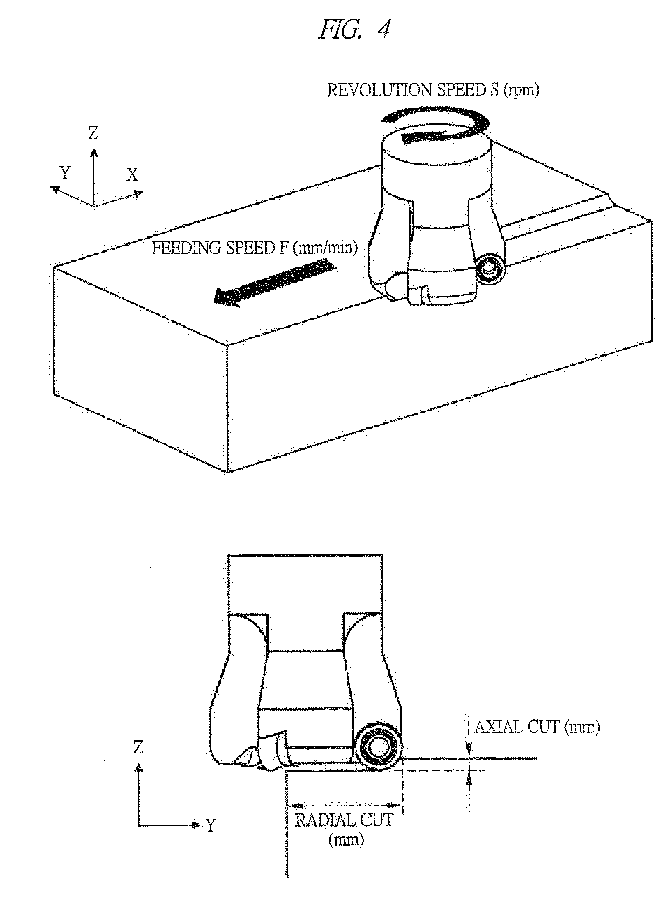

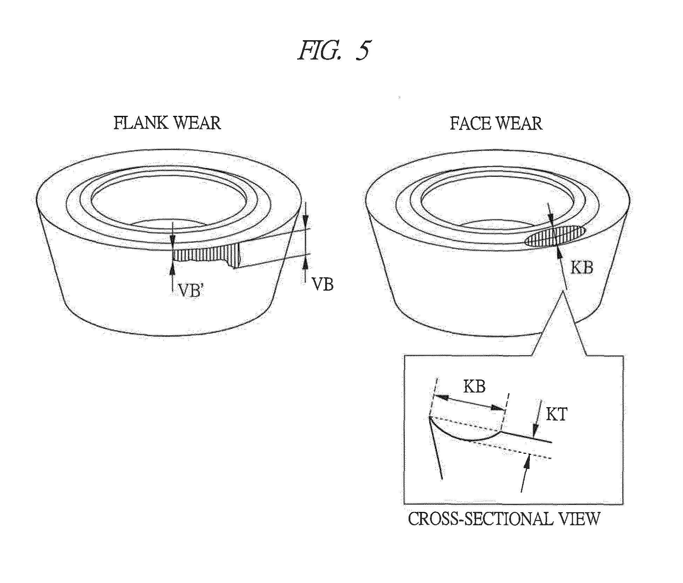

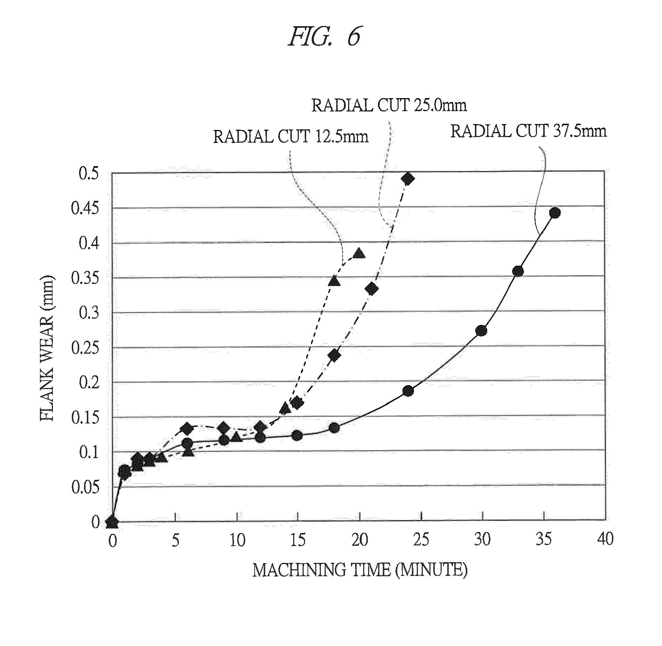

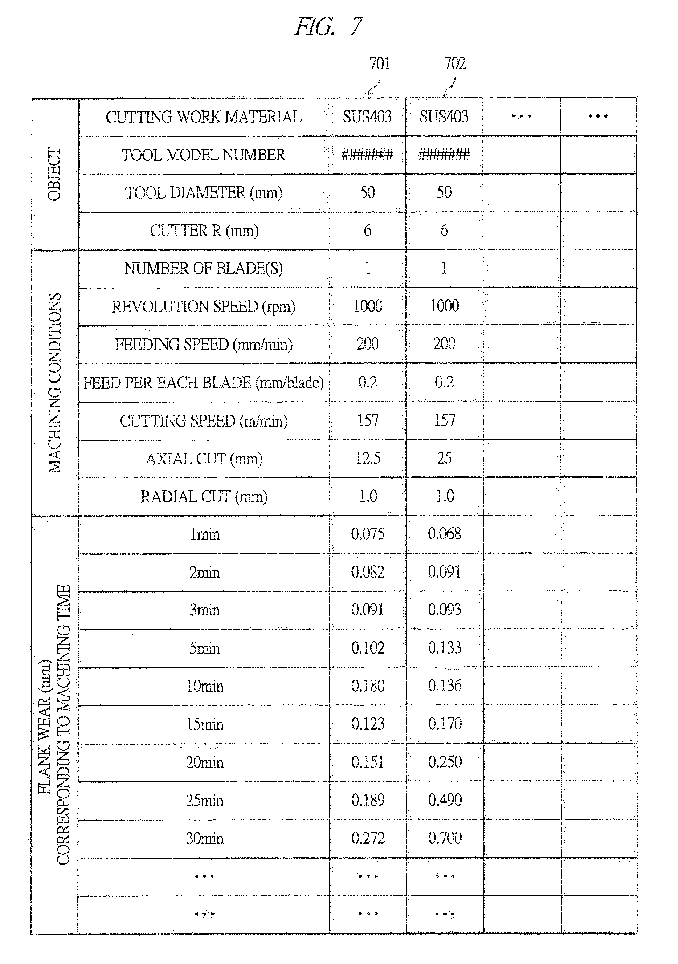

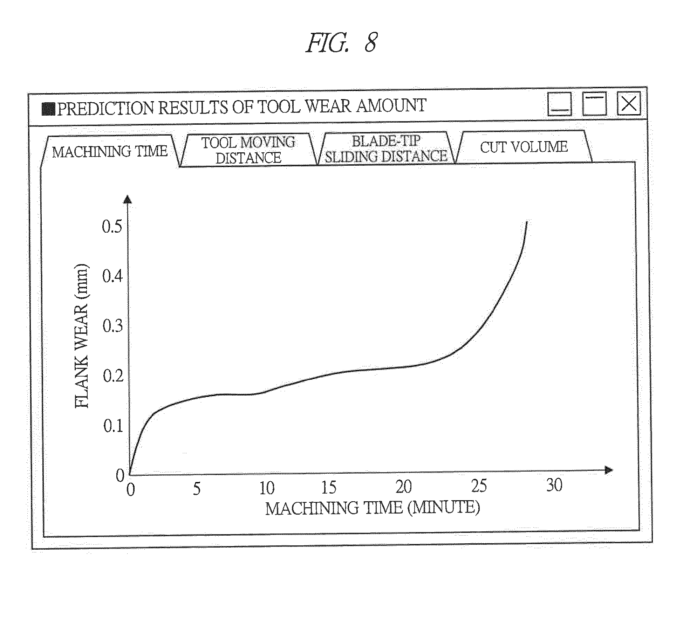

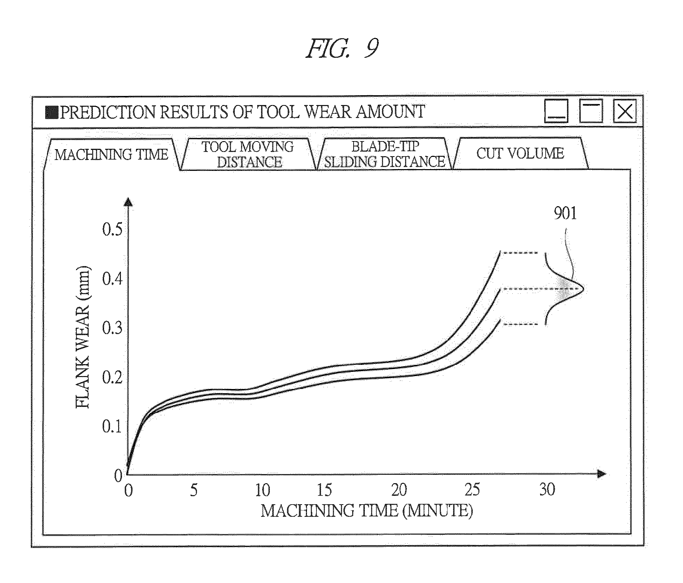

An example of data and output results used in the NC program generating method according to the embodiment of the present invention will be explained with reference to FIG. 4 to FIG. 9. FIG. 4 is an explanatory diagram for explaining a cutting situation in the NC program generating method according to the embodiment of the present invention, FIG. 5 is an explanatory diagram for explaining tool wear in the NC program generating method according to the embodiment of the present invention, FIG. 6 is a diagram showing an example of a tool wear graph registered in the tool wear DB used in the NC program generating method according to the embodiment of the present invention, FIG. 7 is a diagram showing an example of a tool wear table registered in the tool wear DB used in the NC program generating method according to the embodiment of the present invention, FIG. 8 is a diagram showing an example of results of tool wear amounts according to the NC program generating method according to the embodiment of the present invention, and FIG. 9 is a diagram showing an example of output results of predictions according to the NC program generating method according to the embodiment of the present invention.

As shown in FIG. 4, a revolving tool equipped with one or a plurality of cutters rotates at a rotation speed S (rpm) and, at the same time, moves forward at a feeding speed F (mm/min), thereby cutting a cutting work material. The amounts of axial cutting and radial cutting in this case are defined as shown in FIG. 4.

As shown in FIG. 5, typical wear (abrasion) of a tool includes flank wear and face wear, and a largest width VB of the flank wear is generally used as a criterion of tool wear.

However, the tool wear amount registered in the tool wear DB 10 is not limited to this. For example, flank wear VB' of a cutter bottom surface part, an average value $VB_{AVE}$ of flank wear, or the depth KT or width KB of face wear can be employed.

In FIG. 4 and FIG. 5, while a round-shaped cutter is used, for example, polygonal shapes such as tetragonal shapes and triangular shapes, rhombic shapes, and these shapes provided with tapering or circular arcs at corners thereof can be employed as the shape of the cutter. Moreover, not only a replacing-type cutter, but also, for example, a tool in which the tool and a blade have an integrated shape can be employed.

FIG. 6 shows an example of the tool wear graph registered in the tool wear DB 10 (horizontal axis: processing time (minute), vertical axis: flank wear (mm)), and the example of FIG. 6 shows experimental results of the cases in which the axial cut amount is constant, and the radial cut amount is varied (12.5 mm, 25.0 mm, 37.5 mm). This graph is characterized by having the machining states such as the axial cut amount and the radial cut amount as variables and having a plurality of inflection points instead of having straight lines.

FIG. 7 shows an example of a tool wear table registered in the tool wear DB 10; wherein, information such as a cutting work material serving as an object, a tool model number, a tool diameter, and a cutter R; the machining conditions such as the number of blades of the cutter, the rotation speed, the feeding speed, a feed per each blade, the cutting speed, the radial cut amount, and the axial cut amount; and the tool wear amount corresponding to the processing time are mutually associated and registered.

The example of FIG. 7 shows the experimental results of a case in which the objects of a row 701 and a row 702 of the table are the same (SUS 403), and only the radial cut amount is varied (12.5 mm, 25 mm) among the machining conditions. The section of the tool wear amount corresponding to the processing time may include blank sections depending on the data acquired by experiments, or a row (s) of the processing time may be added.

The expression of below Mathematical Expression 1 is used as an example of the function that defines the tool wear registered in the tool wear DB 10.

The tool wear amount $VB_n$ is defined as a function of a coefficient $\alpha_i$, which is determined according to the object and the machining states, and the processing time x. Herein, $\beta$ is a value equal to or higher than 3, and it is characterized by being a function that has a plurality of inflection points instead of having a straight line.

[Mathematical Expression 1]

$$VB_n = \sum_{i=1}^{\beta} \alpha_i x^i$$

The function registered in the tool wear DB 10 is not limited to the expression of Mathematical Expression 1, a function that has 0 intercept and a plurality of inflection points can be employed.

In FIG. 6, FIG. 7, and the expression of Mathematical Expression 1, the tool wear amount corresponding to the processing time is registered. However, the moving distance of the tool, the sliding distance which is the distance by which the tool blade tip has actually carried out processing, the tool wear amount corresponding to the cut volume, etc. can be employed as registered data.

FIG. 8 shows the example in which prediction results of the tool wear amount calculated by the tool-wear-amount calculating unit 8 are displayed by the output unit 2. The tool wear amount is shown as a graph, and not only the processing time (horizontal axis: processing time (minute), vertical axis: flank wear amount (mm)), but also the moving distance of the tool, the sliding distance which is the distance by which the tool blade tip has actually carried out processing, the tool wear amount corresponding to the cut volume, etc. can be displayed, for example, by tab switching.

The above-described tool wear DB 10 may have the distribution of the prediction as a coefficient (s) or a function (s). As a function of the distribution, for example, normal distribution or a triangular fuzzy number can be employed.

FIG. 9 shows the example of the output results of the tool wear amount prediction having distribution. It can be understood that the tool wear amounts is predicted to have the distribution of normal distribution 901.

Furthermore, in the above-described tool wear DB 10, a maximum tool wear amount $VB_{MAX}$ can be registered with respect to the combination of the object and machining conditions.

<NC Program Optimizing Process>

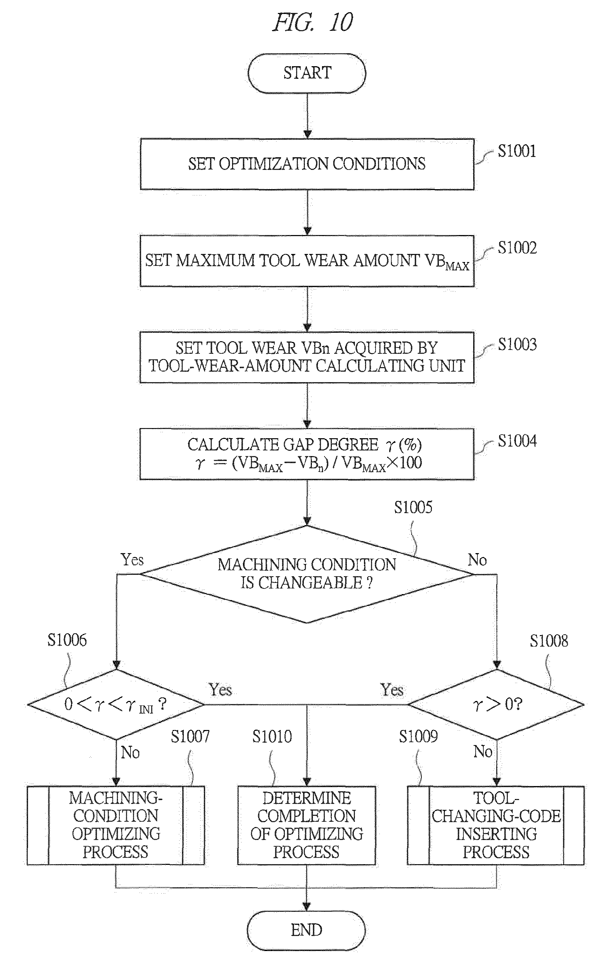

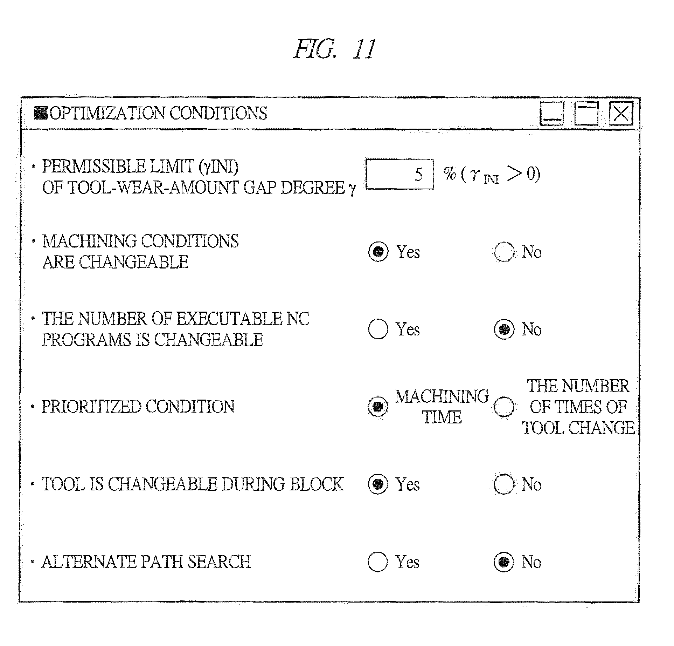

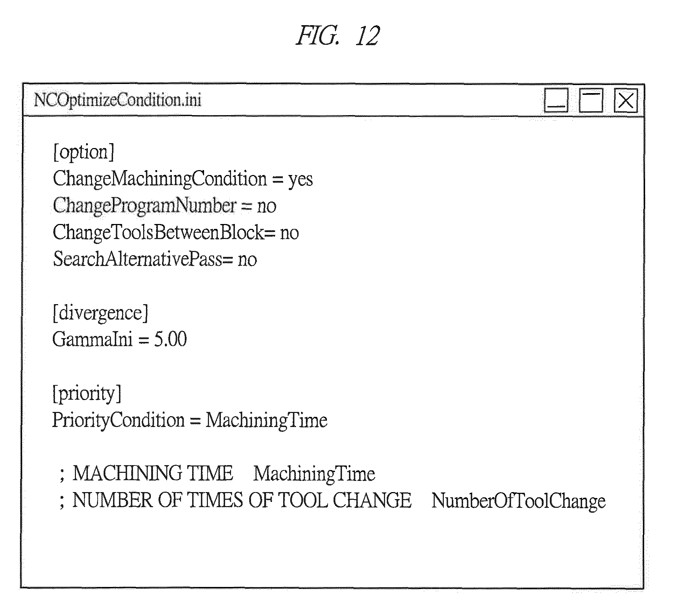

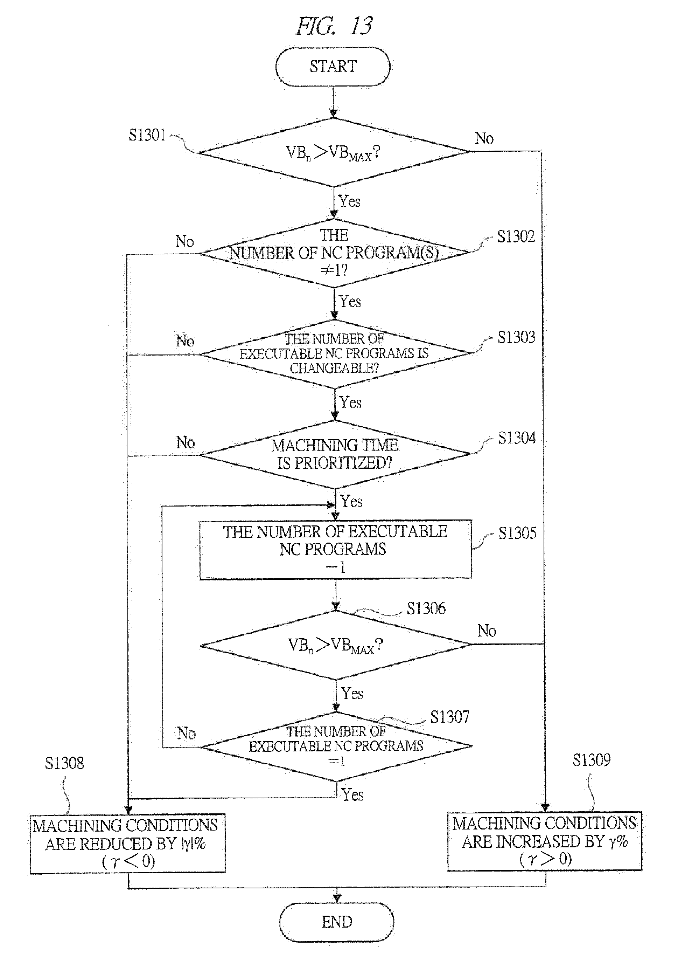

Next, the NC program optimizing process according to the NC program generating method according to the embodiment of the present invention will be explained with reference to FIG. 10 to FIG. 13.  FIG. 10 is a flow chart showing the NC program optimizing process according to the NC program generating method according to the embodiment of the present invention, FIG. 11 is a diagram showing an example of display of an input screen of optimization conditions of the NC program optimizing process according to the NC program generating method according to the embodiment of the present invention, FIG. 12 is a diagram showing an example of the optimization-condition configuration file of the NC program optimizing process according to the NC program generating method according to the embodiment of the present invention, and FIG. 13 is a flow chart showing a processing-condition optimizing process of the NC program optimizing process according to the NC program generating method according to the embodiment of the present invention.

First, in FIG. 10, in step S1001, optimization conditions are set. As set values, user input values received by the input unit 1 or the values of the optimization-condition configuration file 12 are used.

In step S1002, a permissible maximum tool wear amount $VB_{MAX}$ is set. As the value of the maximum tool wear amount $VB_{MAX}$, a user input value received by the input unit 1 or a value retained by the tool wear DB 10 is used.

In step S1003, the tool wear amount $VB_n$ acquired by the tool-wear-amount calculating unit 8 is set. In step S1004, a value $\gamma$ showing the gap degree between the maximum tool wear amount $VB_{MAX}$ and the tool wear amount $VB_n$ by percentage is calculated. $\gamma$ is calculated by the expression of below Mathematical Expression 2.

[Mathematical Expression 2]

$$\gamma = \frac{VB_{MAX} - VB_n}{VB_{MAX}} \times 100$$

In step S1005, whether the machining conditions are changeable  or not is determined according to the set values of step S1001. If they are changeable in step S1005, the process proceeds to step S1006. If they are not changeable in step S1005, the process proceeds to step S1008.

In step S1006, whether the value of the gap degree $\gamma$ calculated in step S1004 is larger than 0 and is smaller than the optimization condition $\gamma_{INI}$ set in step S1001 or not is judged. If the judgment conditions are satisfied in step S1006, the process proceeds to step S1010. If the judgment conditions are not satisfied in step S1006, the process proceeds to step S1007.

If the value of the gap degree $\gamma$ is larger than 0 and is smaller than the optimization condition $\gamma_{INI}$, the tool wear amount $VB_n$ is in a range not exceeding the maximum tool wear amount $VB_{MAX}$, and the gap degree between the tool wear amount $VB_n$ and the maximum tool wear amount $VB_{MAX}$ is within the set condition; therefore, it can be judged that the optimizing process can be completed.

In step S1007, an optimizing process of the machining condition is carried out. The processing-condition optimizing process will be described later. In step S1008, whether the value of the gap degree $\gamma$ calculated in step S1004 is larger than 0 or not is judged. If the judgment condition is satisfied in step S1008, the process proceeds to step S1010. If the judgment condition is not satisfied in step S1008, the process proceeds to step S1009.

Since the machining condition is unchangeable, completion of the optimizing process can be judged by judging that the value of the gap degree $\gamma$ is larger than 0 regardless of the value of the optimization condition $y_{INI}$, in other words, that the tool wear amount $VB_n$ has not exceeded the maximum tool wear amount $VB_{MAX}$.

In step S1009, a process of inserting a tool replacing code in the NC program serving as the object is carried out. This tool-replacing-code inserting process will be described later.

In step S1010, completion of the optimizing process is determined, and the process is finished. This determination is used for the completion judgment of the optimizing process of step S204 of the flow chart shown in FIG. 2.

FIG. 11 shows the example of the display of the input screen of the optimization conditions in the NC program optimizing process. The screen shown in FIG. 11 is displayed by the output unit 2, and user inputs are received by the input unit 1. For example, the permissible limit $\gamma_{INI}$ of the tool-wear-amount gap degree $\gamma$, whether the machining conditions are changeable or not (changeable: Yes, not changeable: No), whether the number of executable NC programs is changeable or not, selection of a prioritized condition (processing time, the number of times of tool change) of optimization, whether the tool is replaceable during a block or not, and whether an alternate path can be searched or not can be set as the optimization conditions by inputting a numerical value or by a choice type.

FIG. 12 shows the example of the optimization-condition configuration file 12 in the NC program optimizing process. The optimization conditions similar to the example shown in FIG. 11 are registered as text information such as an ini file or XML file.

In the processing-condition optimizing process of step S1007 of FIG. 10, as shown in FIG. 13, when the machining conditions are optimized so that the tool wear amount $VB_n$ gets closer to the maximum tool wear amount $VB_{MAX}$, processing efficiency can be improved to shorten processing time, or the machining conditions can be adversely lowered to achieve an appropriate tool use duration.

First, in step S1301, the tool wear amount $VB_n$ and the maximum tool wear amount $VB_{MAX}$ are compared with each other. If the tool wear amount $VB_n$ is larger in step S1301, the process proceeds to step S1302. If the tool wear amount $VB_n$ is not larger in step S1301, the process proceeds to step S1309.

In step S1302, the number of an input-received NC program(s) is checked. If the number of the NC programs is plural, the process proceeds to step S1303. If the number of the NC program is one, the process proceeds to step S1308.

In step S1303, whether the number of the executable NC programs is changeable or not is determined according to the set values of step S1001 of FIG. 10. If changeable in step S1303, the process proceeds to step S1304. If not changeable in step S1303, the process proceeds to step S1308.

In step S1304, the optimization condition to be prioritized is determined according to the set values of step S1001 of FIG. 10. If the processing time is prioritized in step S1304, the process proceeds to step S1305. If the number of times of tool change is prioritized instead of prioritizing processing time in step S1304, the process proceeds to step S1308.

In step S1305, a process of removing the last single NC program among the plurality of NC programs from execution objects is carried out. In step S1306, the tool wear amount $VB_n$ of the case in which the single NC program to be executed is removed is compared with the maximum tool wear amount $VB_{MAX}$.

If the tool wear amount $VB_n$ is larger in step S1306 even after removal of the single NC program, the process proceeds to step S1307. If the tool wear amount $VB_n$ is smaller in step S1306, the process proceeds to step S1309.

In step S1307, the remaining number of the executable NC program(s) is checked. If the number is the last one, the process proceeds to step S1308 since the machining conditions cannot be increased. If the plurality of programs are remaining, the process returns to step S1305.

In step S1308, since the gap degree $\gamma$ of the case of carrying out the present process is negative, the machining condition (s) is reduced by $|\gamma|\%$, thereby causing the tool wear amount $VB_n$ to be lower than the maximum tool wear amount $VB_{MAX}$ to optimize the NC program so that processing can be finished with the set tool.

In step S1309, since the gap degree $\gamma$ of the case of carrying out the present process is positive, the machining condition(s) is increased by $\gamma\%$, thereby causing the tool wear amount $VB_n$ to be closer to the maximum tool wear amount $VB_{MAX}$ to optimize the NC program so that the set tool can be used up without waste.

When the machining condition(s) is to be changed, a method that employs a constant feed per each blade and changes the rotation speed to change the cutting speed and the feeding speed along with the rotation speed is general. However, the machining condition optimization of the present embodiment is not limited to this method. For example, a method that employs a constant rotation speed and changes the feed per each blade to change the feeding speed along with the feed per each blade can be employed.

<Example of Execution of Processing-Condition Optimizing Process>

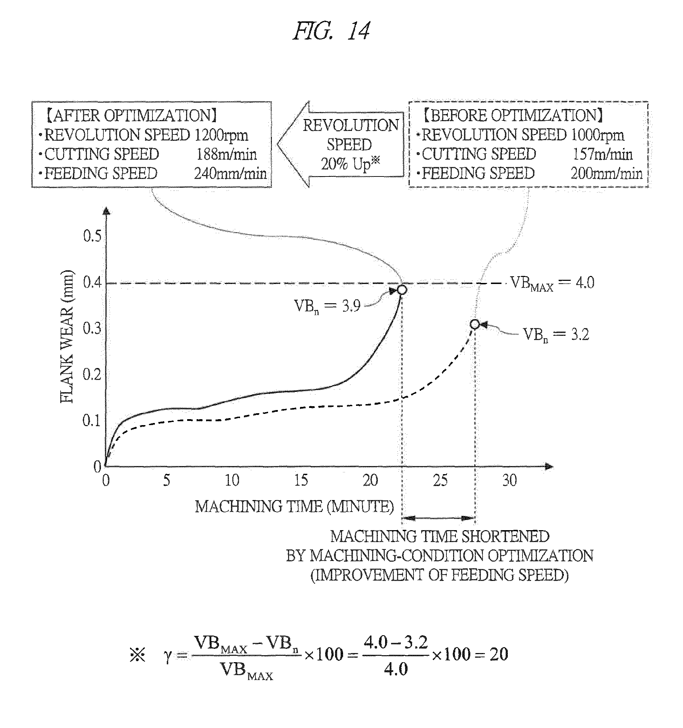

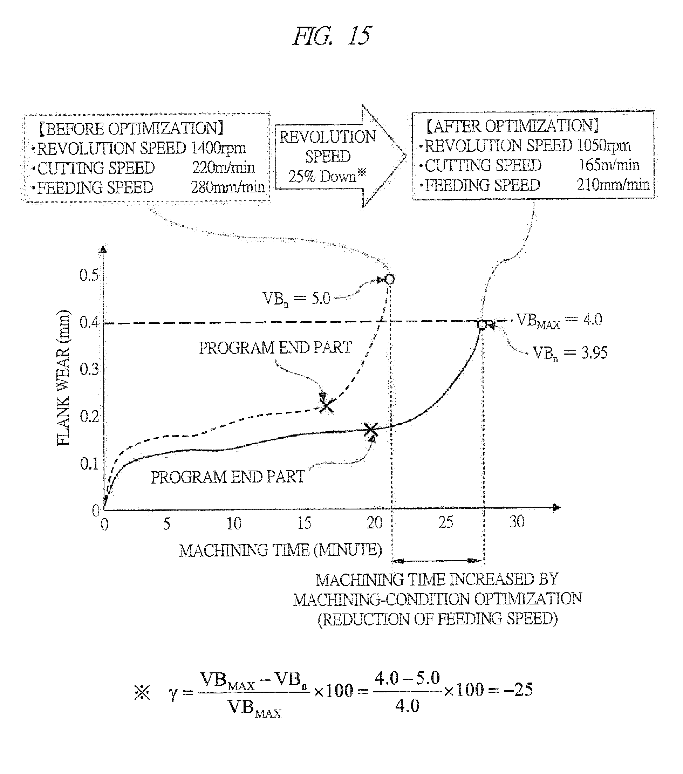

Next, an example in which the NC program optimizing process according to the NC program generating method according to the embodiment of the present invention is executed will be explained with reference to FIG. 14 and FIG. 15. FIG. 14 and FIG. 15 are explanatory diagrams for explaining the example in which the NC program optimizing process according to the NC program generating method according to the embodiment of the present invention was executed.

In the example shown in FIG. 14, the configuration shown in FIG. 11 is used as the conditions of the optimizing process. In this example, $VB_n$ = 3.2 mm, $VB_{MAX}$ = 4.0 mm, wherein the tool wear amount $VB_n$ is smaller than the maximum tool wear amount $VB_{MAX}$; therefore, in the flow chart of FIG. 13, the process proceeds in the order of steps S1301 and S1309. In step S1309, because of the gap degree $\gamma$ = 20 (%), the machining conditions are increased by 20%. In this example, the feed per each blade is constant, and the rotation speed is increased by 20% from 1000 rpm to 1200 rpm, thereby improving the cutting speed from 157 m/min to 188 m/min, improving the feeding speed from 200 mm/min to 240 mm/min, and reducing the processing time by 20% as a result. After the optimization, the process returns to step S202 from step S204 of FIG. 2, the tool wear amount of the NC program after the optimization is calculated, and the process proceeds to step S203. According to $VB_n$ = 3.9 mm and $VB_{MAX}$ = 4.0 mm, the gap degree $\gamma$ = 2.5 (%), wherein step S1006 of FIG. 10 is satisfied, and the optimizing process is completed in the process of step S1010.

In the example shown in FIG. 15, the configuration of FIG. 11 is used as the conditions of the optimizing process. In this example, $VB_n$ = 5.0 mm, $VB_{MAX}$ = 4.0 mm, wherein the tool wear amount $VB_n$ is larger than the maximum tool wear amount $VB_{MAX}$, a plurality of NC programs are present, and the number of the executable NC programs is not changeable in the optimization condition; therefore, in the flow chart of FIG. 13, the process proceeds in the order of steps S1301, S 1302, S1303, and S1308.

In step S1308, because of the gap degree $\gamma$ = -25 (%), the machining conditions are reduced by 25%. In this example, the feed per blade is constant, and the rotation speed is reduced by 25% from 1400 rpm to 1050 rpm, thereby reducing the cutting speed from 220 m/min to 165 m/min and reducing the feeding speed from 280 mm/min to 210 mm/ min; as a result, the processing time is increased by 25%. However, processing steps comprised of the two NC programs can be finished without tool change as a result.

After the optimization, the process returns from step S204 of FIG. 2 to step S202, the tool wear amount of the NC program after the optimization is calculated, and the process proceeds to step S203. According to $VB_n$ = 3.95 mm and $VB_{MAX}$ = 4.0 mm, the gap degree $\gamma$ = 1.25 (%), wherein step S1006 of FIG. 10 is satisfied, and the optimizing process is completed in the process of step S1010.

<Tool-Replacing-Code Inserting Process>

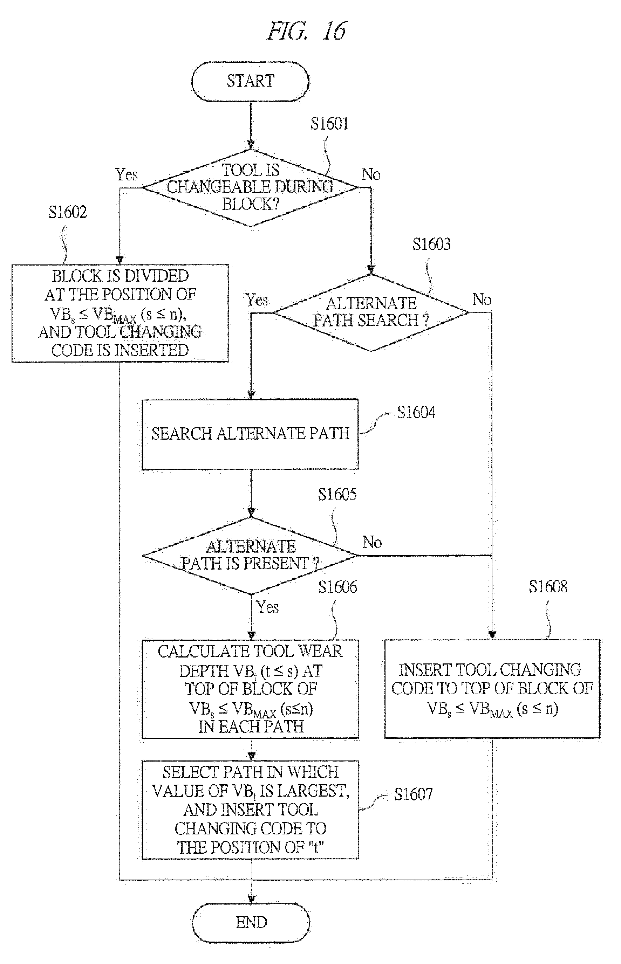

Next, the tool-replacing-code inserting process according to the NC program generating method according to the embodiment of the present invention will be explained with reference to FIG. 16. FIG. 16 is a flow chart showing the tool-replacing-code inserting process according to the NC program generating method according to the embodiment of the present invention.

As shown in FIG. 16, when the tool replacing code is inserted to an appropriate part of the NC program, the NC program can be configured not to exceed the wear amount limit of the tool.

First, in step S1601, whether the tool can be replaced during the block constituting the NC program or not is determined according to the set value of step S1001 of FIG. 10.

If the tool can be replaced during the block in step S1601, the process proceeds to step S1602. If not replaceable in step S1601, the process proceeds to step S1603.

In step S1602, the block is divided at a position where $VB_s \leq VB_{MAX}$ ($s \leq n$), and the tool replacing code is inserted.

In step S1603, whether an alternate path(s) can be searched or not is determined according to the set value of step S1001 of FIG. 10. If the alternate path is to be searched in step S1603, the process proceeds to step S1604. If the search is not to be carried out in step S1603, the process proceeds to step S1608.

In step S1604, the alternate path of the NC program serving as the object is searched from the NC program DB 11. In step S1605, if the alternate path is present as a result of the search in step S1604, the process proceeds to step S1606; if there is no alternate path, the process proceeds to step S1608. A plurality of alternate paths may be present.

In step S1606, the tool wear amount $VB_t$ ($t \leq s$) at the top of the block at which $VB_s = VB_{MAX}$ ($s \leq n$) in each path of the NC program serving as the object and the alternate path(s) is calculated. In step S1607, the path in which the value of $VB_t$ is the largest is selected, and a tool replacing code is inserted to the position of "t". If the value of "t" in the path of the object NC program is larger than the value of "t" in the alternate path, the object NC program is used without using the alternate path.

In step S1608, a tool replacing code is inserted to the top of the block at which $VB_s \leq VB_{MAX}$ ($s \leq n$).

<Examples of Execution of Tool-Replacing-Code Inserting Process>

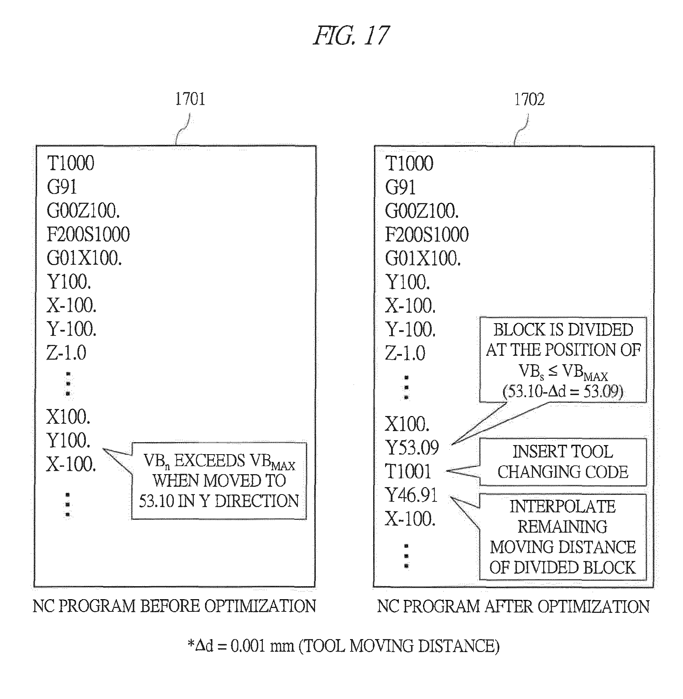

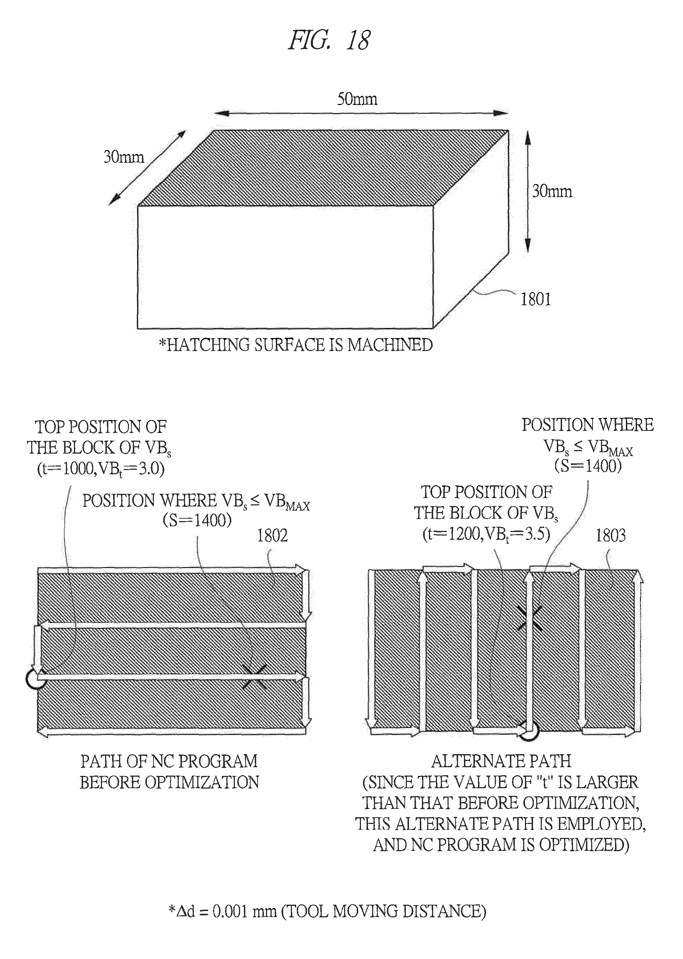

Next, examples in which the tool-replacing-code inserting process according to the NC program generating method according to the embodiment of the present invention was executed will be explained with reference to FIG. 17 and FIG. 18. FIG. 17 and FIG. 18 are explanatory diagrams for explaining the examples in which the tool-replacing-code inserting process according to the NC program generating method according to the embodiment of the present invention was executed.

In the example shown in FIG. 17, a tool moving distance 0.01 mm is used as the process interval $\Delta d$, and the configuration of FIG. 11 is used as the conditions of the optimizing process. In this example, replacement during a block can be carried out; therefore, in the flow chart of FIG. 16, the process proceeds in the order of steps S1601 and S1602.

It is assumed that the tool wear amount $VB_n$ exceeds the maximum tool wear amount $VB_{MAX}$ when moved in a Y-axis direction by 53.10 mm in a block "Y100." of an NC program 1701 before optimization. In the process of step S1602, first, the block is divided at the position of $VB_s \leq VB_{MAX}$, in other words, at the position of 53.09 mm obtained by subtracting the process interval $\Delta d = 0.01$ mm from 53.10 mm. Next, a tool replacing code is inserted after the divided block.

In the end, in order to interpolate the remaining moving distance of the divided block, a block corresponding to the movement of 100 mm - 53.09 mm = 46.91 is inserted. As a result of the above process, in an optimized NC program 1702, "Y100." of the NC program 1701 before optimization is converted to "Y53.09", "T1001", and "Y46.91".

In the example shown in FIG. 18, it is assumed that the tool moving distance 0.01 mm is used as the process interval $\Delta d$, the conditions of the optimizing process indicate that the tool is not replaceable during a block and that there is search of an alternate path(s). It is assumed that the alternate path is present in the single NC program DB 11. In this example, it is not replaceable during the block, the search of the alternate path is carried out, and the alternate path is present; therefore, in the flow chart of FIG. 16, the process proceeds in the order of steps S1601, S1603, S1604, S1605, S1606, and S1607.

"1802" is input as a path of the NC program which processes a hatching surface of "1801" (50 mm x 30 mm x 30 mm) of FIG. 18, and "1803" is registered in the NC program DB 11 as an alternate path. In step S1606, when the tool wear amount $VB_t$ ($t \leq s$) at the top of the block where $VB_s \leq VB_{MAX}$ ($s \leq n$) in each path was calculated, $VB_t$ was equal to 3.0 at the position of t=1000 in the object NC program, and $VB_t$ was equal to 3.5 at the position of t=1200 in the alternate path. In step S1607, the alternate path is selected as the path in which the value of $VB_t$ is the largest, and a tool replacing code is inserted to the position of t=1200. As a result of this process, the NC program that causes the tool wear amount to be closer to the maximum tool wear amount as much as possible under the set optimization conditions can be created.

<Axial-cut varying machining Method in consideration of Boundary Wear>

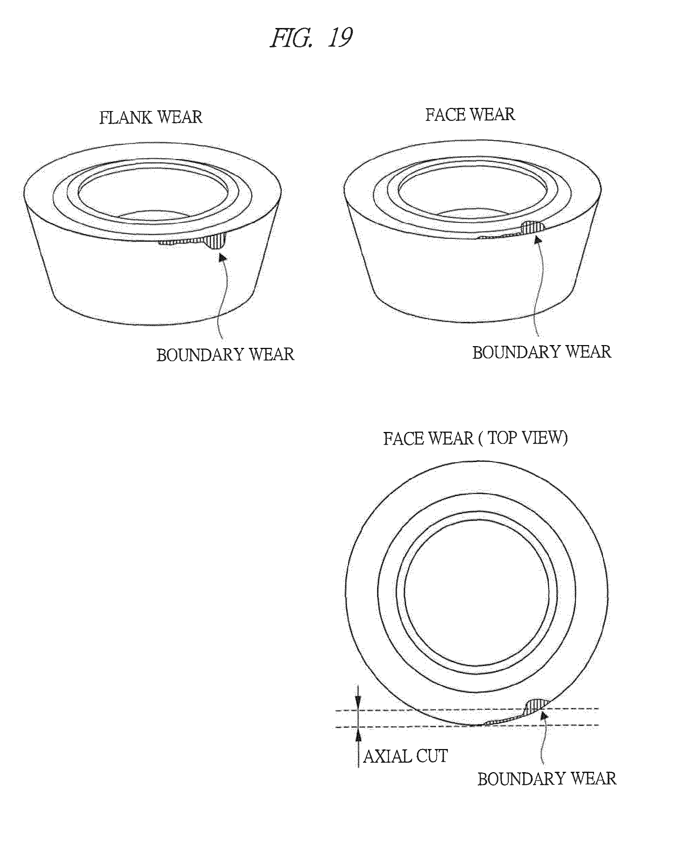

Next, axial-cut varying machining according to the NC program generating method according to the embodiment of the present invention will be explained with reference to FIG. 19 to FIG. 23. FIG. 19 to FIG. 23 are explanatory diagrams for explaining the axial-cut varying machining according to the NC program generating method according to the embodiment of the present invention.

For example, a square timber is often used as the cutting work material before machining; and, generally, rough machining in which processing is carried out while setting a constant axial cut by using only a parallel moving shaft of a machine to improve machining conditions before the material is finished into a designed shape by finish machining is carried out.

In the rough machining, a tool is replaced before the tool relief face reaches a wear limit. Since the rough machining has low required precision compared with finish processing, it can be said that tool change is carried out at the timing in consideration of safety such as tool breakage. In the rough machining, the volume of removal is large; therefore, the duration of tool use is long, and operation delay and increase in tool cost caused by tool change are problems.

As shown in FIG. 19, progress of wear in the rough machining is notable at boundary parts, and this is referred to as boundary wear. As a reason that the boundary wear becomes notable, there is a theory that wear progress becomes large since oxidizing reactions occur at the boundary parts of the processing surface which are in contact with outside air.

Therefore, wear progress in the part from a tool bottom surface to the boundary part is extremely small compared with that in the boundary part although the tool is in contact with the cutting work material. In the NC-program-optimization processing unit, proposing a processing method that effectively utilizes the region to which wear has not been progressed contributes to reduction of the tool cost and the number of times of tool change.

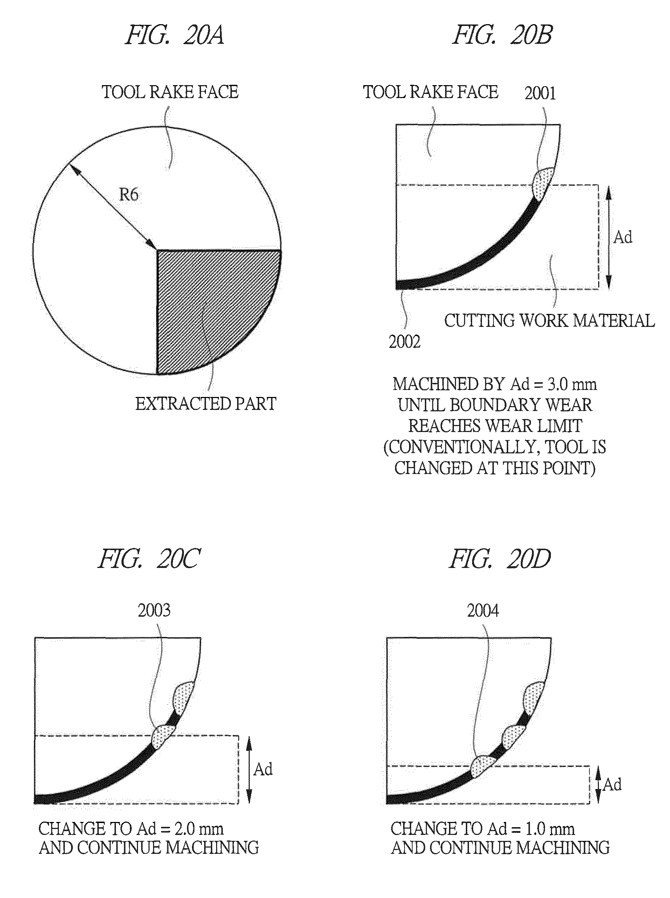

As shown in FIG. 20A, when processing is carried out by axial cut of 3 mm by using a tool having a cutter diameter of R6, boundary wear represented by 2001 of FIG. 20B progresses.

In conventional processing methods, generally, tool change is carried out at the point when the wear represented by 2001 of FIG. 20B reaches a wear limit. However, the part represented by 2002 of FIG. 20B has an extremely small wear amount compared with 2001 and is sufficiently usable although it has been in contact with the cutting work material during processing.

At this point, if the axial cut amount is varied from 3 mm to 2 mm, the wear represented by 2001 of FIG. 20B no longer progresses since the wear is no longer in contact with the cutting work material, and boundary wear represented by 2003 of FIG. 20C progresses.

Furthermore, when the axial cut amount is varied from 2 mm to 1 mm, the wear represented by 2003 of FIG. 20C no longer progresses, and boundary wear represented by 2004 of FIG. 20D progresses.

When the processing method that controls the axial cut amount and gradually generates the boundary wear in the above-described manner is employed, the tool can be used up.

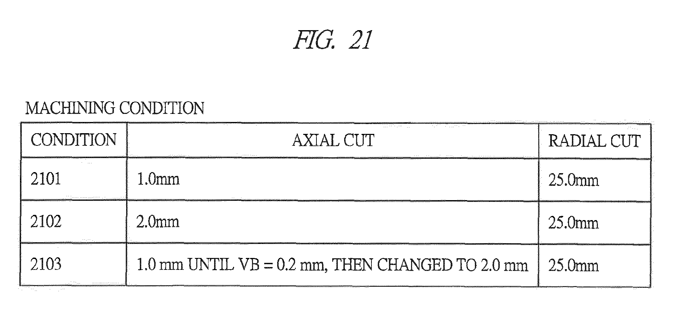

FIG. 21 to FIG. 23B show examples of results of comparison of three machining methods in the cases in which the axial cut of 1 mm, the axial cut of 2 mm, and the axial cut of 2 mm were varied to 1 mm during processing. In FIG. 21, in a condition 2103, the timing of varying the axial cut was flank wear VB = 0.2 mm. The maximum wear was VB = 0.4 mm.

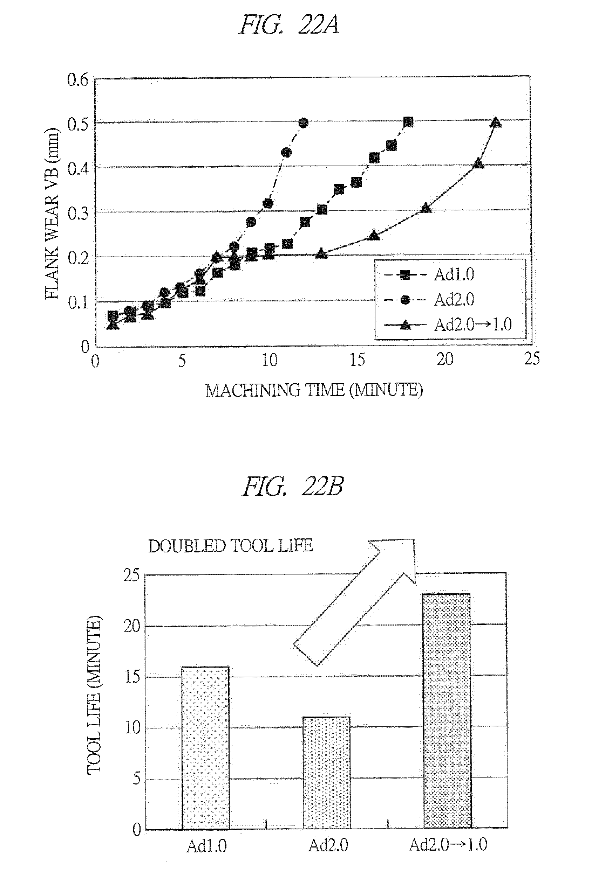

As shown in FIG. 22A, when the machining method of the condition 2103 of FIG. 21 is used, the machining time taken until the maximum wear VB = 0.4 mm is longer as compared with that of a condition 2101 and a condition 2102; and, as shown in FIG. 22B, it can be understood that a doubled effect is maximally exerted as a tool life when it reaches the maximum wear VB = 0.4 mm.

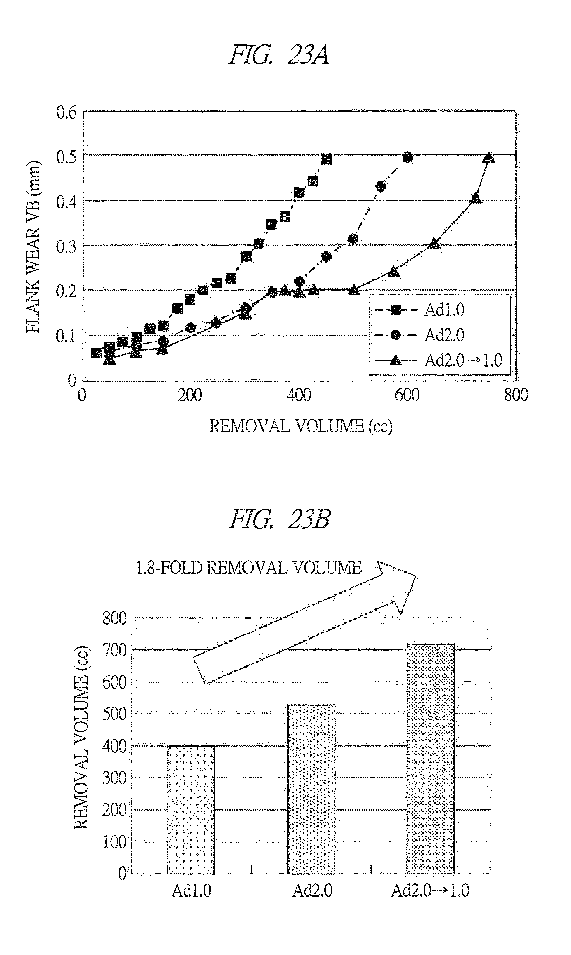

Moreover, as shown in FIG. 23A, when the processing method of the condition 2103 of FIG. 21 is used, the volume removed until the maximum wear VB = 0.4 mm is large compared with those of the condition 2101 and the condition 2102; and, as shown in FIG. 23B, it can be understood that a 1.8-fold effect is maximally exerted as the removal volume until it reaches the maximum wear VB = 0.4 mm.

<NC Program Optimizing Process using Axial-cut varying machining in consideration of Boundary Wear>

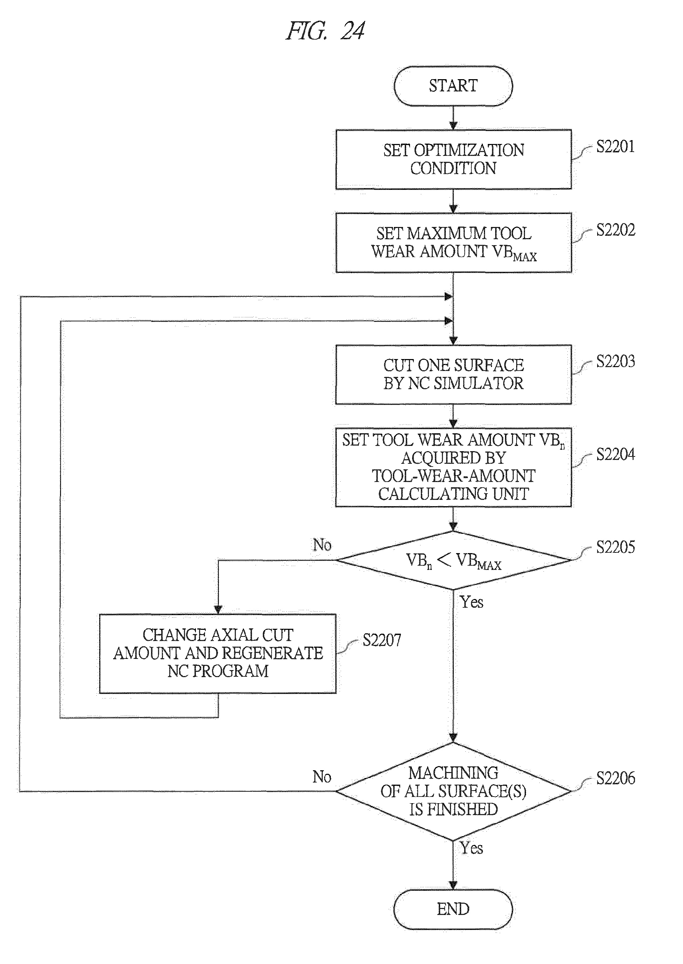

Next, with reference to FIG. 24, the NC program optimizing process using the axial-cut varying machining in consideration of boundary wear in the NC program generating method according to the embodiment of the present invention will be explained. FIG. 24 is a flow chart showing the NC program optimizing process using the axial-cut varying machining in consideration of boundary wear in the NC program generating method according to the embodiment of the present invention.

First, in FIG. 24, an optimization condition is set in step S2201. As the optimization condition, a variation width of the axial cut amount is set. As the set value, a user input value received by the input unit 1 or a value of the optimization-condition configuration file is used. The setting of the optimization condition can be realized also by a form in which the contents described in FIG. 11 and FIG. 12 are changed.

In step S2202, a permissible maximum tool wear amount $VB_{MAX}$ is set. As the value of the maximum tool wear amount $VB_{MAX}$, a user input value received by the input unit 1 or a value retained by the tool wear DB 10 is used. The maximum tool wear amount $VB_{MAX}$ may be set depending on the axial cut amount.

In step S2203, a process of cutting one surface of a cutting work material is simulated by the NC simulator 5.

In step S2204, the tool wear amount $VB_n$ acquired by the tool-wear-amount calculating unit 8 is set.

In step S2205, the magnitude relationship between the maximum tool wear amount $VB_{MAX}$ and the tool wear amount $VB_n$ is judged. If the tool wear amount $VB_n$ is not exceeding the maximum tool wear amount $VB_{MAX}$ in step S2205, the process proceeds to step S2206. If exceeding, the process proceeds to step S2207.

In step S2206, whether all of machining object surfaces of the cutting work material have been processed or not is judged. If the machining of all the surfaces has been finished, the process is completed. If the processing of all the surfaces has not been finished, the process proceeds to step S2203 and a next surface is machined.

In step S2207, based on the condition setting of step S2201, the axial cut amount is changed to a value smaller than the current one, and an NC program is regenerated. In this process, the removal volume per cutting of one surface becomes small since the axial cut amount becomes smaller; therefore, the number of times of cutting the surface is increased, and a machining path(s) and an NC program(s) corresponding to the increased amount are also generated.

<Example of Execution of NC Program Optimizing Process using Axial-cut varying machining in consideration of Boundary Wear>

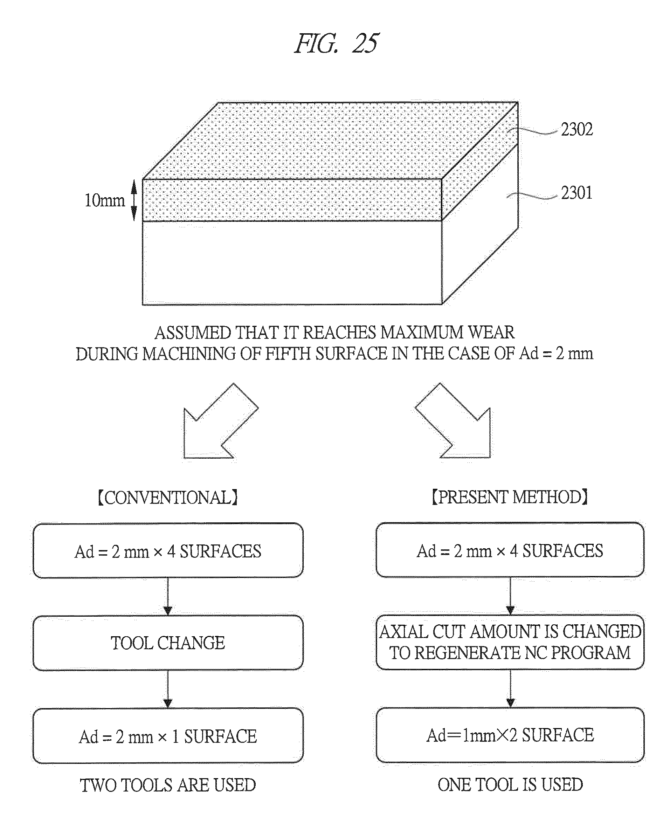

Next, an example in which the NC program optimizing process using the axial-cut varying machining in consideration of boundary wear in the NC program generating method according to the embodiment of the present invention was executed will be explained with reference to FIG. 25. FIG. 25 is an explanatory diagram for explaining the example in which the NC program optimizing process using the axial-cut varying machining in consideration of boundary wear in the NC program generating method according to the embodiment of the present invention was executed.

In the example shown in FIG. 25, it is assumed that a region of 2302 corresponding to 10 mm of an upper surface of a cutting work material 2301 is to be removed by rough machining. As a result of the tool-wear-amount calculating process S202 of the flow chart of FIG. 2, in the case of axial cut of 2.0 mm, it is assumed to reach maximum wear during machining of a fifth surface. In a conventional machining method, for the sake of safety, tool change is carried out at the point when a fourth surface is finished, and the remaining one surface has to be processed with a new tool; therefore, two tools are required in total.

In the present embodiment, upon execution of the NC program optimizing process using the axial-cut varying machining in consideration of boundary wear, an axial-cut variation amount of 1.0 mm is assumed to be set as the optimization condition in step S2201 shown in FIG. 24. Moreover, each surface is cut by the NC simulator in step S2203, and a tool wear amount is calculated in step S2204.

As a result of the judgment of step S2205, the process proceeds to step S2206 since it does not reach the maximum wear set in step S2202 up to a fourth surface; and, the process returns to step S2203 since processing of all the surfaces has not been finished. Since it exceeds the maximum wear at the point when the fifth surface is finished, the process proceeds from step S2205 to S2207.

In step S2207, according to the setting in step S2201, the axial cut is changed from 2.0 mm to 1.0 mm, and an NC program is also regenerated with a change to the volume of two surfaces from the remaining one surface in accordance with the change in the axial cut. By using the regenerated NC program, processing of the fifth surface is executed again in step S2203.

In this manner, in the present embodiment, processing of all the surfaces can be finished by changing the axial cut without carrying out tool change. By virtue of this process, the tool can be used up as much as possible under the set optimization condition, and the NC program that reduces the number of times of tool change can be created.

The present invention is not limited to the foregoing embodiments and but includes various modification examples. For example, the above-described embodiment concretely described the present invention so that the present invention can be easily understood, and thus the present invention is not necessarily limited to the one including all the configurations described in the foregoing.

Part of the configuration of a certain embodiment can be replaced by the configuration of another embodiment, and the configuration of the other embodiment can be added to the configuration of the certain embodiment. Moreover, part of the configuration of the embodiment can be subjected to addition/deletion/replacement of other configurations.

Part or all of the above-described configurations, functions, processing units, processing means, etc. may be realized by hardware, for example, by designing with integrated circuits. Also, the above-described configurations, functions, etc. may be realized by software by interpreting and executing programs, which realize the functions, by a processor. Information such as programs, tables, files, etc. which realize the functions can be stored in recording devices such as memories, hard disks, SSD (Solid State Drive), etc. or in recording media such as IC cards, SD cards, DVD, etc.

Only control lines and information lines which are considered to be necessary for explanations are shown, and not all the control lines and information lines in terms of a product are shown. It may be considered that almost all of the configurations are mutually connected in practice.

**INDUSTRIAL APPLICABILITY**

The present invention relates to an NC program generating method of an NC working machine which carries out three-dimensional-shape cutting and can be widely applied to systems, devices, etc. which predict wear of a tool.

**DESCRIPTION OF REFERENCE NUMERALS**

1 ··· INPUT UNIT, 2 ··· OUTPUT UNIT, 3 ··· CAD, 4 ··· CAM, 5 ··· NC SIMULATOR, 6 ··· MACHINING-CONDITION ACQUIRING UNIT, 7 ... MACHINING-STATE ACQUIRING UNIT, 8 ··· TOOL-WEAR-AMOUNT CALCULATING UNIT, 9 ··· NC-PROGRAM-OPTIMIZATION PROCESSING UNIT, 10 ··· TOOL WEAR DATABASE (TOOL WEAR DB), 11 ··· NC PROGRAM DATABASE (NC PROGRAM DB), 101 ··· PROCESSING UNIT, 102 ··· STORAGE UNIT, 103 ··· CONNECTION LINE.

**Claims**

1. An NC program generating method of generating an NC program used in a working machine controlled by a numerical-value control device, the method comprising the steps of:

> executing an NC simulation of the NC program by an NC simulator at each process interval set in advance;
> acquiring a machining condition of the each process interval from the NC simulator by a machining-condition acquiring unit;
> acquiring a machining state of the each process interval from the NC simulator by a machining-state acquiring unit;
> referencing a tool wear amount corresponding to the machining state from a tool wear database, in which information of the tool wear amount of a tool set to correspond to the machining condition and the machining state is registered, and calculating information about a tool wear amount of the each process interval by a tool-wear-amount calculating unit; and
> changing the machining condition of the NC program and optimizing the NC program based on the information about the tool wear amount of the each process interval calculated in the tool-wear-amount calculating unit by an NC-program-optimization processing unit so that the tool can be used without waste.

2. The NC program generating method according to claim 1,
   wherein tool wear information registered in the tool wear database is comprised of a plurality of mutually different graphs, tables, or functions corresponding to the machining condition and the machining state, and the graph or the function has a plurality of inflection points.

3. The NC program generating method according to claim 1,
   wherein the tool wear amount calculated by the  tool-wear-amount calculating unit has distribution.

4. The NC program generating method according to claim 1,
   wherein, if the information about the tool wear amount calculated by the tool-wear-amount calculating unit exceeds a maximum tool wear amount of the tool set in advance, the NC-program-optimization processing unit lowers the machining condition so as not to exceed the maximum tool wear amount.

5. The NC program generating method according to claim 1,
   wherein, if the information about the tool wear amount calculated by the tool-wear-amount calculating unit is lower than a maximum tool wear amount of the tool set in advance, the NC-program-optimization processing unit increases the machining condition within a range not exceeding the maximum tool wear amount.

6. The NC program generating method according to claim 1,
   wherein the NC-program-optimization processing unit specifies a tool changing part of the tool based on the information about the tool wear amount calculated by the tool-wear-amount calculating unit so as not to exceed a maximum tool wear amount of the tool set in advance.

7. The NC program generating method according to claim 6,
   wherein the NC-program-optimization processing unit divides one program constituting the NC program based on the information about the tool wear amount calculated by the tool-wear-amount calculating unit.

8. The NC program generating method according to claim 1,
   wherein, in a processing by the NC-program-optimization processing unit, the NC-program-optimization processing unit  generates an NC program that varies a wear progressing part by varying an axial-direction cut amount based on the information about the tool wear amount calculated by the tool-wear-amount calculating unit.

9. A cutting method of processing the shape of a workpiece into a predetermined three-dimensional shape by a revolving tool,
   wherein, in the cutting by the revolving tool, a boundary wear progressing position is varied by carrying out processing with an increased axial cut amount at the beginning of cutting, and carrying out processing with a reduced axial cut amount at a point when boundary wear reaches a certain value.

*FIG. 1*

101

| MACHINING-CONDITION ACQUIRING UNIT 6 | TOOL-WEAR -AMOUNT CALCULATING UNIT 8 |
| MACHINING-STATE ACQUIRING UNIT 7 | NC-PROGRAM-OPTIMIZATION PROCESSING UNIT 9 |

1 INPUT UNIT

2 OUTPUT UNIT

103

CAD 3

CAM 4

NC SIMULATOR 5

TOOL WEAR DB 10

NC PROGRAM DB 11

OPTIMIZATION-CONDITION CONFIGURATION FILE 12

STORAGE UNIT

102

# FIG. 2

```
         ┌─────────────┐
         │    START    │
         └─────────────┘
                │
                ▼
┌──────────────────────────────────────────────┐
│  RECEIVE INPUT OF NC PROGRAM SERVING AS OBJECT │  S201
└──────────────────────────────────────────────┘
                │
                ▼
┌──────────────────────────────────────────────┐
│    TOOL-WEAR-AMOUNT CALCULATING PROCESS        │  S202
└──────────────────────────────────────────────┘
                │
                ▼
┌──────────────────────────────────────────────┐
│        NC PROGRAM OPTIMIZING PROCESS           │  S203
└──────────────────────────────────────────────┘
                │
                ▼
No  ◇────────────────────────────────────────────◇  S204
    │       OPTIMIZING PROCESS COMPLETED ?         │
    ◇────────────────────────────────────────────◇
                │
               Yes
                ▼
┌──────────────────────────────────────────────┐
│  REGISTER OPTIMIZED NC PROGRAM IN NC PROGRAM DB │  S205
└──────────────────────────────────────────────┘
                │
                ▼
         ┌─────────────┐
         │     END     │
         └─────────────┘
```

## FIG. 3

START

INITIALIZATION $n=0, VB_n=0$ — S301

SET PROCESS INTERVAL $\Delta d$ — S302

EXECUTE NC SIMULATION ONLY BY PROCESS INTERVAL $\Delta d$
$n=n+1$ — S303

ACQUIRE MACHINING CONDITIONS AND MACHINING STATES — S304

JUDGE WHETHER CUT OR NOT
(CUT VOLUME > 0) — S305

No

Yes

REFERENCE TOOL WEAR DB AND
CALCULATE TOOL-WEAR PROGRESS VOLUME $\Delta VB$ — S306

L WEAR AMOUNT $VB_n = VB_{n-1} + \Delta VB$ — S307

NC PROGRAM FINISHED? — S308

No

Yes

END

*FIG. 4*

*FIG. 5*

FLANK WEAR                    FACE WEAR

CROSS-SECTIONAL VIEW

FIG. 6

## FIG. 7

| | | 701 | 702 | | |
|---|---|---|---|---|---|
| OBJECT | CUTTING WORK MATERIAL | SUS403 | SUS403 | ・・・ | ・・・ |
| | TOOL MODEL NUMBER | ####### | ####### | | |
| | TOOL DIAMETER (mm) | 50 | 50 | | |
| | CUTTER R (mm) | 6 | 6 | | |
| MACHINING CONDITIONS | NUMBER OF BLADE(S) | 1 | 1 | | |
| | REVOLUTION SPEED (rpm) | 1000 | 1000 | | |
| | FEEDING SPEED (mm/min) | 200 | 200 | | |
| | FEED PER EACH BLADE (mm/blade) | 0.2 | 0.2 | | |
| | CUTTING SPEED (m/min) | 157 | 157 | | |
| | AXIAL CUT (mm) | 12.5 | 25 | | |
| | RADIAL CUT (mm) | 1.0 | 1.0 | | |
| FLANK WEAR (mm) CORRESPONDING TO MACHINING TIME | 1min | 0.075 | 0.068 | | |
| | 2min | 0.082 | 0.091 | | |
| | 3min | 0.091 | 0.093 | | |
| | 5min | 0.102 | 0.133 | | |
| | 10min | 0.180 | 0.136 | | |
| | 15min | 0.123 | 0.170 | | |
| | 20min | 0.151 | 0.250 | | |
| | 25min | 0.189 | 0.490 | | |
| | 30min | 0.272 | 0.700 | | |
| | ・・・ | ・・・ | ・・・ | | |
| | ・・・ | ・・・ | ・・・ | | |

FIG. 8

PREDICTION RESULTS OF TOOL WEAR AMOUNT

MACHINING TIME | TOOL MOVING DISTANCE | BLADE-TIP SLIDING DISTANCE | CUT VOLUME

FLANK WEAR (mm) vs MACHINING TIME (MINUTE)

FIG. 9

**PREDICTION RESULTS OF TOOL WEAR AMOUNT**

MACHINING TIME | TOOL MOVING DISTANCE | BLADE-TIP SLIDING DISTANCE | CUT VOLUME

*FIG. 10*

```
                    ┌─────────┐
                    │  START  │
                    └─────────┘
                         │
                         ▼
      ┌──────────────────────────────────────┐  S1001
      │     SET OPTIMIZATION CONDITIONS       │
      └──────────────────────────────────────┘
                         │
                         ▼
      ┌──────────────────────────────────────┐  S1002
      │ SET MAXIMUM TOOL WEAR AMOUNT VB_MAX   │
      └──────────────────────────────────────┘
                         │
                         ▼
      ┌──────────────────────────────────────┐  S1003
      │     SET TOOL WEAR VBn ACQUIRED BY     │
      │ TOOL-WEAR-AMOUNT CALCULATING UNIT     │
      └──────────────────────────────────────┘
                         │
                         ▼
      ┌──────────────────────────────────────┐  S1004
      │     CALCULATE GAP DEGREE γ (%)        │
      └──────────────────────────────────────┘
```

S1004: CALCULATE GAP DEGREE $\gamma$ (%)

$$\gamma = (VB_{MAX} - VB_n) / VB_{MAX} \times 100$$

S1005

MACHINING CONDITION IS CHANGEABLE ?

Yes     No

S1006

$0 < \gamma < \gamma_{INI}$ ?

Yes

S1008

$\gamma > 0$ ?

Yes

S1007 — No

S1010

S1009 — No

MACHINING-CONDITION OPTIMIZING PROCESS

DETERMINE COMPLETION OF OPTIMIZING PROCESS

TOOL-CHANGING-CODE INSERTING PROCESS

END

## FIG. 11

**■OPTIMIZATION CONDITIONS**  □ ⊟ ⊠

- PERMISSIBLE LIMIT (γINI)
  OF TOOL-WEAR-AMOUNT GAP DEGREE γ  | 5 | % ( $\gamma_{INI} > 0$ )

- MACHINING CONDITIONS
  ARE CHANGEABLE  ● Yes  ○ No

- THE NUMBER OF EXECUTABLE NC
  PROGRAMS IS CHANGEABLE  ○ Yes  ● No

- PRIORITIZED CONDITION  ● MACHINING TIME  ○ THE NUMBER OF TIMES OF TOOL CHANGE

- TOOL IS CHANGEABLE DURING BLOCK  ● Yes  ○ No

- ALTERNATE PATH SEARCH  ○ Yes  ● No

*FIG. 12*

NCOptimizeCondition.ini       ☐ ☐ ☒

[option]
ChangeMachiningCondition = yes
ChangeProgramNumber = no
ChangeToolsBetweenBlock= no
SearchAlternativePass= no


[divergence]
GammaIni = 5.00


[priority]
PriorityCondition = MachiningTime


; MACHINING TIME   MachiningTime
; NUMBER OF TIMES OF TOOL CHANGE   NumberOfToolChange

## *FIG. 13*

```
                    START

S1301                                        No
              VB_n > VB_MAX?

                    Yes

No            THE                           S1302
         NUMBER OF NC PROGRAM(S)
              ≠ 1?

                    Yes

No       THE NUMBER OF                      S1303
      EXECUTABLE NC PROGRAMS IS
           CHANGEABLE?

                    Yes

No       MACHINING TIME                     S1304
          IS PRIORITIZED?

                    Yes

         THE NUMBER OF EXECUTABLE           S1305
              NC PROGRAMS
                  −1

                                            S1306
                                        No
              VB_n > VB_MAX?

                    Yes
                                            S1307
No       THE NUMBER OF
      EXECUTABLE NC PROGRAMS
              = 1

S1308               Yes                      S1309

MACHINING CONDITIONS          MACHINING CONDITIONS
ARE REDUCED BY |γ|%           ARE INCREASED BY γ%
   (γ < 0)                       (γ > 0)

                    END
```

*FIG. 14*

【AFTER OPTIMIZATION】
· REVOLUTION SPEED 1200rpm
· CUTTING SPEED      188m/min
· FEEDING SPEED      240mm/min

REVOLUTION
SPEED
20% Up※

【BEFORE OPTIMIZATION】
· REVOLUTION SPEED 1000rpm
· CUTTING SPEED      157m/min
· FEEDING SPEED      200mm/min

FLANK WEAR (mm)

0.5

0.4 — $VB_{MAX} = 4.0$

$VB_n = 3.9$

0.3 — $VB_n = 3.2$

0.2

0.1

0

0    5    10    15    20    25    30

MACHINING TIME (MINUTE)

MACHINING TIME SHORTENED
BY MACHINING-CONDITION OPTIMIZATION
(IMPROVEMENT OF FEEDING SPEED)

$$※\quad \gamma = \frac{VB_{MAX} - VB_n}{VB_{MAX}} \times 100 = \frac{4.0 - 3.2}{4.0} \times 100 = 20$$

*FIG. 15*

【BEFORE OPTIMIZATION】
·REVOLUTION SPEED 1400rpm
·CUTTING SPEED      220m/min
·FEEDING SPEED      280mm/min

REVOLUTION SPEED 25% Down※

【AFTER OPTIMIZATION】
·REVOLUTION SPEED 1050rpm
·CUTTING SPEED       165m/min
·FEEDING SPEED       210mm/min

$VB_n = 5.0$

PROGRAM END PART

$VB_{MAX} = 4.0$

$VB_n = 3.95$

PROGRAM END PART

FLANK WEAR (mm)

0.5
0.4
0.3
0.2
0.1
0

0   5   10   15   20   25   30

MACHINING TIME (MINUTE)

MACHINING TIME INCREASED BY
MACHINING-CONDITION OPTIMIZATION
(REDUCTION OF FEEDING SPEED)

$$※ \quad \gamma = \frac{VB_{MAX} - VB_n}{VB_{MAX}} \times 100 = \frac{4.0 - 5.0}{4.0} \times 100 = -25$$

## FIG. 16

```
START
```

S1601

**TOOL IS CHANGEABLE DURING BLOCK?**
— Yes → S1602
— No → S1603

S1602

**BLOCK IS DIVIDED AT THE POSITION OF $VB_s \leq VB_{MAX}$ ($s \leq n$), AND TOOL CHANGING CODE IS INSERTED**

S1603

**ALTERNATE PATH SEARCH ?**
— Yes → S1604
— No → S1608

S1604

**SEARCH ALTERNATE PATH**

S1605

**ALTERNATE PATH IS PRESENT ?**
— No → S1608
— Yes → S1606

S1606

**CALCULATE TOOL WEAR DEPTH $VB_t$ ($t \leq s$) AT TOP OF BLOCK OF $VB_s \leq VB_{MAX}$ ($s \leq n$) IN EACH PATH**

S1607

**SELECT PATH IN WHICH VALUE OF $VB_t$ IS LARGEST, AND INSERT TOOL CHANGING CODE TO THE POSITION OF "t"**

S1608

**INSERT TOOL CHANGING CODE TO TOP OF BLOCK OF $VB_s \leq VB_{MAX}$ ($s \leq n$)**

```
END
```

FIG. 17

1701

```
T1000
G91
G00Z100.
F200S1000
G01X100.
Y100.
X-100.
Y-100.
Z-1.0
    ⋮
X100.
Y100.
X-100.      VB_n EXCEEDS VB_MAX
            WHEN MOVED TO
    ⋮       53.10 IN Y DIRECTION
```

NC PROGRAM BEFORE OPTIMIZATION

1702

```
T1000
G91
G00Z100.
F200S1000
G01X100.
Y100.
X-100.
Y-100.     BLOCK IS DIVIDED
Z-1.0      AT THE POSITION OF
    ⋮          VB_s ≤ VB_MAX
    ⋮        (53.10-Δd = 53.09)
X100.
Y53.09     INSERT TOOL
T1001      CHANGING CODE
Y46.91     INTERPOLATE
X-100.       REMAINING
           MOVING DISTANCE
    ⋮      OF DIVIDED BLOCK
```

NC PROGRAM AFTER OPTIMIZATION

*Δd = 0.001 mm (TOOL MOVING DISTANCE)

## FIG. 18

50mm

30mm

30mm

1801

*HATCHING SURFACE IS MACHINED

TOP POSITION OF
THE BLOCK OF $VB_s$
($t=1000, VB_t=3.0$)

POSITION WHERE $VB_s \leq VB_{MAX}$
($S=1400$)

1802

POSITION WHERE
$VB_s \leq VB_{MAX}$
($S=1400$)

TOP POSITION OF
THE BLOCK OF $VB_s$
($t=1200, VB_t=3.5$)

1803

PATH OF NC PROGRAM
BEFORE OPTIMIZATION

ALTERNATE PATH
(SINCE THE VALUE OF "t" IS LARGER
THAN THAT BEFORE OPTIMIZATION,
THIS ALTERNATE PATH IS EMPLOYED,
AND NC PROGRAM IS OPTIMIZED)

*$\Delta d = 0.001$ mm (TOOL MOVING DISTANCE)

*FIG. 19*

FLANK WEAR

BOUNDARY WEAR

FACE WEAR

BOUNDARY WEAR

FACE WEAR ( TOP VIEW)

AXIAL CUT

BOUNDARY WEAR

## *FIG. 20A*

TOOL RAKE FACE

R6

EXTRACTED PART

## *FIG. 20B*

TOOL RAKE FACE    2001

Ad

2002

CUTTING WORK MATERIAL

MACHINED BY Ad = 3.0 mm
UNTIL BOUNDARY WEAR
REACHES WEAR LIMIT
(CONVENTIONALLY, TOOL IS
CHANGED AT THIS POINT)

## *FIG. 20C*

2003

Ad

CHANGE TO Ad = 2.0 mm
AND CONTINUE MACHINING

## *FIG. 20D*

2004

Ad

CHANGE TO Ad = 1.0 mm
AND CONTINUE MACHINING

33

*FIG. 21*

MACHINING CONDITION

| CONDITION | AXIAL CUT | RADIAL CUT |
|---|---|---|
| 2101 | 1.0mm | 25.0mm |
| 2102 | 2.0mm | 25.0mm |
| 2103 | 1.0 mm UNTIL VB = 0.2 mm, THEN CHANGED TO 2.0 mm | 25.0mm |

*FIG. 22A*

*FIG. 22B*

## FIG. 23A

## FIG. 23B

*FIG. 24*

```
                    ┌─────────┐
                    │  START  │
                    └────┬────┘
                         ▼
         ┌──────────────────────────┐
         │    SET OPTIMIZATION       │  S2201
         │      CONDITION            │
         └──────────────┬───────────┘
                        ▼
         ┌──────────────────────────┐
         │    SET MAXIMUM TOOL       │  S2202
         │  WEAR AMOUNT VB_MAX       │
         └──────────────┬───────────┘
                        ▼
         ┌──────────────────────────┐
         │    CUT ONE SURFACE        │  S2203
         │    BY NC SIMULATOR        │
         └──────────────┬───────────┘
                        ▼
         ┌──────────────────────────┐
         │ SET TOOL WEAR AMOUNT VB_n │  S2204
         │      ACQUIRED BY          │
         │  TOOL-WEAR-AMOUNT         │
         │  CALCULATING UNIT         │
         └──────────────┬───────────┘
```

VB$_n$ < VB$_{MAX}$  — S2205 (No / Yes)

CHANGE AXIAL CUT AMOUNT AND REGENERATE NC PROGRAM — S2207

MACHINING OF ALL SURFACE(S) IS FINISHED — S2206 (No / Yes)

END

## FIG. 25

ASSUMED THAT IT REACHES MAXIMUM WEAR
DURING MACHINING OF FIFTH SURFACE IN THE CASE OF Ad = 2 mm

【CONVENTIONAL】

| Ad = 2 mm × 4 SURFACES |

| TOOL CHANGE |

| Ad = 2 mm × 1 SURFACE |

TWO TOOLS ARE USED

【PRESENT METHOD】

| Ad = 2 mm × 4 SURFACES |

| AXIAL CUT AMOUNT IS CHANGED TO REGENERATE NC PROGRAM |

| Ad=1mm×2 SURFACE |

ONE TOOL IS USED

| **INTERNATIONAL SEARCH REPORT** | International application No. |
|---|---|
| | PCT/JP2012/054422 |

**A. CLASSIFICATION OF SUBJECT MATTER**
*G05B19/4093*(2006.01)i, *B23Q15/00*(2006.01)i, *G05B19/4069*(2006.01)i

According to International Patent Classification (IPC) or to both national classification and IPC

**B. FIELDS SEARCHED**

Minimum documentation searched (classification system followed by classification symbols)
G05B19/4093, B23Q15/00, G05B19/4069

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho  1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 1998/19822 A1  (Okuma Corp., Mori Seiki Co., Ltd., Mitsutoyo Corp.), 14 May 1998 (14.05.1998), page 25, line 14 to page 28, line 17; page 30, lines 12 to 16 & EP 000879675 A1 | 1-8 |
| Y | JP 2008-221454 A  (Kobe Steel, Ltd.), 25 September 2008 (25.09.2008), paragraph [0068]; fig. 13 (Family: none) | 1-8 |
| Y | JP 6-143093 A  (Fanuc Ltd.), 24 May 1994 (24.05.1994), paragraph [0018]; fig. 4 (Family: none) | 1-8 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 May, 2012 (14.05.12) | 29 May, 2012 (29.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/054422 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y<br>X | JP 2001-179519 A  (Toyoda Machine Works, Ltd.),<br>03 July 2001 (03.07.2001),<br>entire text; all drawings<br>entire text; all drawings<br>(Family: none) | 8<br>9 |
| A | JP 2004-255514 A  (Kobe Steel, Ltd.),<br>16 September 2004 (16.09.2004),<br>entire text; all drawings<br>(Family: none) | 1-9 |
| A | WO 2000/12260 A1  (Mori Seiki Co., Ltd., Okuma<br>Corp., Mitsutoyo Corp.),<br>09 March 2000 (09.03.2000),<br>entire text; all drawings<br>& EP 001027954 A1 | 1-9 |
| A | WO 1998/19820 A1  (Mori Seiki Co., Ltd.,<br>Mitsutoyo Corp., Okuma Corp.),<br>14 May 1998 (14.05.1998),<br>entire text; all drawings<br>& EP 000881034 A1 | 1-9 |

Form PCT/ISA/210 (continuation of second sheet) (July 2009)

## INTERNATIONAL SEARCH REPORT

| | International application No. |
|---|---|
| | PCT/JP2012/054422 |

**Box No. II**  **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**  **Observations where unity of invention is lacking (Continuation of item 3 of first sheet)**

This International Searching Authority found multiple inventions in this international application, as follows:
        The number of the inventions set forth in claims 1-9 of the present international application is two.
        Claims 1-8 and claim 9 have no same or corresponding technical feature.
        Consequently, the inventions of claims 1-8 and claim 9 do not comply with the requirement of unity of invention.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**
        ☐ The additional search fees were accompanied by the applicant's protest and, where applicable, the payment of a protest fee.
        ☐ The additional search fees were accompanied by the applicant's protest but the applicable protest fee was not paid within the time limit specified in the invitation.
        ☐ No protest accompanied the payment of additional search fees.

Form PCT/ISA/210 (continuation of first sheet (2)) (July 2009)

**EP 2 687 933 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5138497 B
- JP 2004255514 A
- WO 0012260 A
- WO 9819820 A